(19) Europäisches Patentamt
European Patent Office
Office européen des brevets

(11) EP 1 771 911 B1

(12) EUROPÄISCHE PATENTSCHRIFT

(45) Veröffentlichungstag und Bekanntmachung des Hinweises auf die Patenterteilung:
**14.10.2009 Patentblatt 2009/42**

(21) Anmeldenummer: **05773445.1**

(22) Anmeldetag: **21.07.2005**

(51) Int Cl.:
***H01M 8/24*** (2006.01) ***H01M 8/10*** (2006.01)
***H01M 2/08*** (2006.01) ***C08J 5/22*** (2006.01)
***H01M 8/02*** (2006.01)

(86) Internationale Anmeldenummer:
**PCT/EP2005/007945**

(87) Internationale Veröffentlichungsnummer:
**WO 2006/008157 (26.01.2006 Gazette 2006/04)**

(54) **MEMBRAN-ELEKTRODENEINHEITEN UND BRENNSTOFFZELLEN MIT HOHER LEBENSDAUER**
IMPROVED MEMBRANE ELECTRODE ASSEMBLIES AND HIGHLY DURABLE FUEL CELLS
UNITES MEMBRANE-ELECTRODE ET PILES A COMBUSTIBLE DE LONGEVITE SUPERIEURE

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **21.07.2004 DE 102004035305**

(43) Veröffentlichungstag der Anmeldung:
**11.04.2007 Patentblatt 2007/15**

(73) Patentinhaber: **BASF Fuel Cell GmbH**
**65926 Frankfurt am Main (DE)**

(72) Erfinder:
- **UENSAL, Oemer**
  **55128 Mainz (DE)**
- **SCHMIDT, Thomas**
  **60594 Frankfurt (DE)**
- **BELACK, Jörg**
  **55118 Mainz (DE)**

(74) Vertreter: **Luderschmidt, Schüler & Partner**
**Patentanwälte**
**John-F.-Kennedy-Strasse 4**
**65189 Wiesbaden (DE)**

(56) Entgegenhaltungen:
**WO-A-03/096465**
**DE-A1- 10 235 360**
**US-A1- 2003 078 157**
**US-A1- 2003 091 885**
**US-B1- 6 174 616**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 1 771 911 B1

Printed by Jouve, 75001 PARIS (FR)

**Beschreibung**

Die vorliegende Erfindung betrifft verbesserte Membran-Elektrodeneinheiten und Brennstoffzellen mit hoher Lebensdauer, aufweisend zwei elektrochemisch aktive Elektroden, die durch eine Polymer-Elektrolyt-Membran getrennt sind.

In Polymer-Elektrolyt-Membran(PEM)-Brennstoffzellen werden heute als protonenleitende Membranen fast ausschließlich sulfonsäuremodifizierte Polymere eingesetzt. Dabei finden überwiegend perfluorierte Polymere Anwendung. , Prominentes Beispiel hierfür ist Nafion™ von DuPont de Nemours, Willmington USA. Für die Protonenleitung ist ein relativ hoher Wassergehalt in der Membran erforderlich, der typischerweise bei 4-20 Molekülen Wasser pro Sulfonsäuregruppe liegt. Der notwendige Wassergehalt, aber auch die Stabilität des Polymers in Verbindung mit saurem Wasser und den Reaktionsgasen Wasserstoff und Sauerstoff, limitiert die Betriebstemperatur der PEM-Brennstoffzellenstacks auf 80 - 100 °C. Höhere Betriebstemperaturen können ohne einen Verlust an Leistung der Brennstoffzelle nicht realisiert werden. Bei Temperaturen, die für ein gegebenes Druckniveau, oberhalb des Taupunktes von Wasser liegen, trocknet die Membran komplett aus, und die Brennstoffzelle liefert keine elektrische Energie mehr, da der Widerstand der Membran auf so hohe Werte steigt, daß kein nennenswerter Stromfluß mehr erfolgt.

Eine Membran-Elektroden-Einheit mit integrierter Dichtung, die auf der zuvor dargelegten Technologie beruht, wird beispielsweise in US 5,464,700 beschrieben. Dabei sind im äußeren Bereich der Membran-Elektroden-Einheit, auf den nicht durch die Elektroden abgedeckten Flächen der Membran Filme aus Elastomeren vorgesehen, die zugleich die Dichtung zu den Bipolarplatten und zum Außenraum darstellen.

Durch diese Maßnahme kann eine Ersparnis an sehr kostspieligem Membranmaterial erzielt werden. Weitere Vorteile, die durch diesen Aufbau erzielt werden, beziehen sich auf die Kontamination der Membran. Eine Verbesserung der Langzeitstabilität wird in US 5,464,700 nicht dargestellt. Dies ergibt sich auch aus den sehr niedrigen Betriebstemperaturen. In der Beschreibung der in US 5,464,700 dargelegten Erfindung wird darauf hingewiesen, daß die Betriebstemperatur der Zelle auf bis 80 °C beschränkt ist. Elastomere sind auch in der Regel nur für Dauergebrauchstemperaturen bis 100 °C geeignet. Höhere Einsatztemperaturen sind mit Elastomeren nicht zu erreichen. Die hierin beschriebene Technik ist also für Brennstoffzellen mit Betriebstemperaturen über 100 °C nicht geeignet.

Aus systemtechnischen Gründen sind aber höhere Betriebstemperaturen als 100 °C in der Brennstoffzelle wünschenswert. Die Aktivität der in der Membran-Elektroden-Einheit (MEE) enthaltenen Katalysatoren auf Edelmetallbasis ist bei hohen Betriebstemperaturen wesentlich besser.

Insbesondere bei der Verwendung von sogenannten Reformaten aus Kohlenwasserstoffen sind im Reformergas deutliche Mengen an Kohlenmonoxid enthalten, die üblicherweise durch eine aufwendige Gasaufbereitung bzw. Gasreinigung entfernt werden müssen. Bei hohen Betriebstemperaturen steigt die Toleranz der Katalysatoren gegenüber den CO-Verunreinigungen.

Des weiteren entsteht Wärme beim Betrieb von Brennstoffzellen. Eine Kühlung dieser Systeme auf unter 80°C kann jedoch sehr aufwendig sein. Je nach Leistungsabgabe können die Kühlvorrichtungen wesentlich einfacher gestaltet werden. Das bedeutet, dass die in Brennstoffzellensystemen, die bei Temperaturen über 100°C betrieben werden, die Abwärme deutlich besser nutzbar gemacht und somit die Brennstoffzellensystem-Effizienz gesteigert werden kann.

Um diese Temperaturen zu erreichen, werden im Allgemeinen Membranen mit neuen Leitfähigkeitsmechanismen verwendet. Ein Ansatz hierfür ist der Einsatz von Membranen, die ohne den Einsatz von Wasser eine ionische Leitfähigkeit zeigen. Die erste erfolgversprechende Entwicklung in diese Richtung ist in der Schrift WO96/13872 dargelegt.

In dieser Schrift wird auch eine erste Methode zur Herstellung von Membran-Elektroden-Einheiten beschrieben. Dabei werden zwei Elektroden auf die Membran gepreßt, die nur jeweils einen Teil der beiden Hauptflächen der Membran abdecken. Auf den verbleibenden freie Teil der Hauptflächen der Membran wird in der Zelle eine PTFE-Dichtung gedrückt, so daß die Gasräume von Anode und Kathode gegeneinander und gegen die Umgebung abgedichtet sind. Jedoch wurde festgestellt, daß eine derart hergestellte Membran-Elektroden-Einheiten nur bei sehr kleinen Zellflächen von 1 $cm^2$ eine hohe Haltbarkeit hat. Werden größere Zellen, insbesondere mit einer Fläche von mindestens 10 $cm^2$ hergestellt, so ist die Haltbarkeit der Zellen bei Temperaturen von größer 150°C auf weniger als 100 Stunden begrenzt.

Eine weitere Hochtemperatur-Brennstoffzelle wird in der Druckschrift JP-A-2001-196082 offenbart. Hierin wird eine Elektroden-Membran-Einheit dargestellt, die mit einer Polyimid-Dichtung versehen ist. Problematisch an diesem Aufbau ist jedoch, daß zur Abdichtung zwei Membranen notwendig sind, zwischen denen ein Dichtring aus Polyimid vorgesehen ist. Da die Dicke der Membran aus technischen Gründen möglichst gering gewählt werden muß, ist die Dicke des Dichtrings zwischen den beiden in JP-A-2001-196082 beschriebenen Membranen äußerst begrenzt. In Langzeitversuchen wurde festgestellt, daß ein derartiger Aufbau ebenfalls nicht über einen Zeitraum von mehr als 1000 Stunden stabil ist.

Des Weiteren ist aus DE 10235360 eine Membran-Elektroden-Einheit bekannt, die Polyimid-Schichten zur Abdichtung enthält. Allerdings weisen diese Schichten eine einheitliche Dicke auf, sodass der Randbereich dünner ist als der Bereich, der in Kontakt mit der Membran steht.

Die zuvor genannten Membran-Elektroden-Einheiten werden im Allgemeinen mit planaren Bipolarplatten verbunden, in die Kanäle für einen Gasstrom eingefräst sind. Da die Membran- Elektroden-Einheiten teilweise eine größere Dicke aufweisen als die zuvor beschriebenen Dichtungen, wird zwischen der Dichtung der Membran-Elektroden-Einheiten und den Bipolarplatten eine Dichtung eingelegt, die üblicherweise aus PTFE hergestellt wird.
Es wurde nun festgestellt, dass die Lebensdauer der zuvor beschriebenen Brennstoffzellen begrenzt ist.
Aufgabe der vorliegenden Erfindung ist daher, eine verbesserte MEE und die damit betriebenen Brennstoffzellen bereitzustellen, die vorzugsweise die folgenden Eigenschaften aufweisen sollten:

- Die Zellen sollten bei einem Betrieb bei Temperaturen über 100°C eine lange Lebensdauer zeigen.
- Die Einzelzellen sollten eine gleichbleibende oder verbesserte Leistung bei Temperaturen über 100°C über einen langen Zeitraum zeigen.
- Hierbei sollten die Brennstoffzellen nach langer Betriebszeit eine hohe Ruhespannung sowie einen geringen Gasdurchtritt aufweisen (gas cross over).
- Die Brennstoffzellen sollten insbesondere bei Betriebstemperaturen oberhalb von 100°C eingesetzt werden können und ohne zusätzliche Brenngasbefeuchtung auskommen. Insbesondere sollten die Membran-Elektroden-Einheiten permanenten oder wechselnden Druckdifferenzen zwischen Anode und Kathode widerstehen können.
- Des weiteren war es mithin Aufgabe der vorliegenden Erfindung eine Membran-Elektroden-Einheit zur Verfügung zu stellen, die einfach und kostengünstig hergestellt werden kann.
- Insbesondere sollte die Brennstoffzelle auch nach langer Zeit eine hohe Spannung aufweisen und bei niedriger Stöchiometrie betrieben werden können.
- Insbesondere sollte die MEE robust gegen unterschiedliche Operationsbedingungen (T, p, Geometrie etc.) sein um die allgemeine Zuverlässigkeit zu erhöhen.

Gelöst werden diese Aufgaben durch Membran-Elektroden-Einheiten mit allen Merkmalen des Anspruchs 1.
Gegenstand der vorliegenden Erfindung ist dementsprechend eine Membran-Elektroden-Einheit aufweisend zwei Gasdiffusionsschichten, die jeweils mit einer Katalysatorschicht in Kontakt stehen, die durch eine Polymer-Elektrolyt-Membran getrennt werden, wobei die Polymer-Elektrolyt-Membran einen inneren Bereich, der in Kontakt mit einer Katalysatorschicht steht, und einen äußeren Bereich, der nicht auf der Oberfläche einer Gasdiffusionsschicht vorgesehen ist, aufweist, dadurch gekennzeichnet, dass die Dicke aller Komponenten des äußeren Bereichs 50 bis 100 %, bezogen auf die Dicke aller Komponenten des inneren Bereichs, beträgt, wobei die Dicke des äußeren Bereichs bei einer Temperatur von 80°C und einem Druck von 5 $N/mm^2$ über einen Zeitraum von 5 Stunden höchstens um 5% abnimmt, wobei diese Abnahme der Dicke nach einem ersten Verpressen bestimmt wird, welches bei einem Druck von 5 $N/mm^2$ über eine Zeit von 1 Minute erfolgt.

Polymer-Elektrolyt-Membranen

Für die Zwecke der vorliegenden Erfindung geeignete Polymer-Elektrolyt-Membranen sind an sich bekannt. Im Allgemeinen werden hierfür Membranen eingesetzt, die Phosphonsäuregruppen umfassende Polymere enthalten, die durch Polymerisation von Phosphonsäuregruppen umfassenden Monomeren erhältlich sind
Derartige Polymermembranen sind unter anderem durch ein Verfahren erhältlich, umfassend die Schritte

A) Herstellung einer Zusammensetzung umfassend Phosphonsäuregruppen umfassende Monomere,
B) Aufbringen einer Schicht unter Verwendung der Zusammensetzung gemäß Schritt A) auf einem Träger,
C) Polymerisation der in dem flächigen Gebilde erhältlich gemäß Schritt B) vorhandenen Phosphonsäuregruppen umfassenden Monomere.

Phosphonsäuregruppen umfassende Monomere sind in der Fachwelt bekannt. Es handelt sich hierbei um Verbindungen, die mindestens eine Kohlenstoff-Kohlenstoff-Doppelbindung und mindestens eine Phosphonsäuregruppe aufweisen. Vorzugsweise weisen die zwei Kohlenstoffatome, die die Kohlenstoff-Kohlenstoff-Doppelbindung bilden, mindestens zwei, vorzugsweise 3 Bindungen zu Gruppen auf, die zu einer geringen sterischen Hinderung der Doppelbindung führen. Zu diesen Gruppen gehören unter anderem Wasserstoffatome und Halogenatome, insbesondere Fluoratome. Im Rahmen der vorliegenden Erfindung ergibt sich das Phosphonsäuregruppen umfassende Polymer aus dem Polymerisationsprodukt, das durch Polymerisation des Phosphonsäuregruppen umfassenden Monomers allein oder mit weiteren Monomeren und/oder Vernetzern erhalten wird.
Das Phosphonsäuregruppen umfassende Monomer kann ein, zwei, drei oder mehr Kohlenstoff-Kohlenstoff-Doppelbindungen umfassen. Des weiteren kann das Phosphonsäuregruppen umfassende Monomer ein, zwei, drei oder mehr Phosphonsäuregruppen enthalten.
Im allgemeinen enthält das Phosphonsäuregruppen umfassende Monomer 2 bis 20, vorzugsweise 2 bis 10

Kohlenstoffatome.

Bei dem in Schritt A) verwendeten Phosphonsäuregruppen umfassenden Monomer handelt es sich vorzugsweise um Verbindungen der Formel

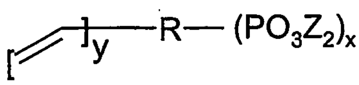

worin

- R eine Bindung, eine zweibindige C1-C15-Alkylengruppe, zweibindige C1-C15-Alkylenoxygruppe, beispielsweise Ethylenoxygruppe, oder eine zweibindige C5-C20-Aryl- oder Heteroarylgruppe bedeutet, wobei die vorstehenden Reste ihrerseits mit Halogen, -OH, COOZ, -CN, $NZ_2$ substituiert sein können,
- Z unabhängig voneinander Wasserstoff, C1-C15-Alkylgruppe, C1-C15-Alkoxygruppe, beispielsweise Ethylenoxygruppe, oder C5-C20-Aryl oder Heteroarylgruppe bedeutet, wobei die vorstehenden Reste ihrerseits mit Halogen, -OH, -CN, substituiert sein können und
- x eine ganze Zahl 1, 2, 3, 4, 5, 6, 7, 8, 9 oder 10 bedeutet
- y eine ganze Zahl 1, 2, 3, 4, 5, 6, 7, 8, 9 oder 10 bedeutet

und/oder der Formel

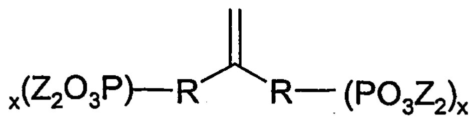

worin

- R eine Bindung, eine zweibindige C1-C15-Alkylengruppe, zweibindige C1-C15-Alkylenoxygruppe, beispielsweise Ethylenoxygruppe, oder eine zweibindige C5-C20-Aryl- oder Heteroarylgruppe bedeutet, wobei die vorstehenden Reste ihrerseits mit Halogen, -OH, COOZ, -CN, $NZ_2$ substituiert sein können,
- Z unabhängig voneinander Wasserstoff, C1-C15-Alkylgruppe, C1-C15-Alkoxygruppe, beispielsweise Ethylenoxygruppe oder C5-C20-Aryl oder Heteroarylgruppe bedeutet, wobei die vorstehenden Reste ihrerseits mit Halogen, -OH, -CN, substituiert sein können und
- x eine ganze Zahl 1, 2, 3, 4, 5, 6, 7, 8, 9 oder 10 bedeutet

und/oder der Formel

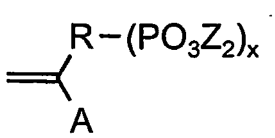

worin

- A eine Gruppe der Formeln $COOR^2$, CN, $CONR^2_2$, $OR^2$ und/oder $R^2$ darstellt, worin $R^2$ Wasserstoff, eine C1-C15-Alkylgruppe, C1-C15-Alkoxygruppe, beispielsweise Ethylenoxygruppe oder C5-C20-Aryl oder Heteroarylgruppe bedeutet, wobei die vorstehenden Reste ihrerseits mit Halogen, -OH, COOZ, -CN, $NZ_2$ substituiert sein können
- R eine Bindung, eine zweibindige C1-C15-Alkylengruppe, zweibindige C1-C15-Alkylenoxygruppe, beispielsweise Ethylenoxygruppe oder zweibindige C5-C20-Aryl- oder Heteroarylgruppe bedeutet, wobei die vorstehenden Reste ihrerseits mit Halogen, -OH, COOZ, -CN, $NZ_2$ substituiert sein können,
- Z unabhängig voneinander Wasserstoff, C1-C15-Alkylgruppe, C1-C15-Alkoxygruppe, beispielsweise Ethylenoxygruppe oder C5-C20-Aryl oder Heteroarylgruppe bedeutet, wobei die vorstehenden Reste ihrerseits mit Halogen, -OH, -CN, substituiert sein können und

x eine ganze Zahl 1, 2, 3, 4, 5, 6, 7, 8, 9 oder 10 bedeutet.

Zu den bevorzugten Phosphonsäuregruppen umfassenden Monomeren gehören unter anderem Alkene, die Phosphonsäuregruppen aufweisen, wie Ethenphosphonsäure, Propenphosphonsäure, Butenphosphonsäure; Acrylsäure- und/oder Methacrylsäure-Verbindungen, die Phosphonsäuregruppen aufweisen, wie beispielsweise 2-Phosphonomethyl-acrylsäure, 2-Phosphonomethyl-methacrylsäure, 2-Phosphonomethyl-acrylsäureamid und 2-Phosphonomethyl-methacrylsäureamid.

Besonders bevorzugt wird handelsübliche Vinylphosphonsäure (Ethenphosphonsäure), wie diese beispielsweise von der Firma Aldrich oder Clariant GmbH erhältlich ist, eingesetzt. Eine bevorzugte Vinylphosphonsäure weist eine Reinheit von mehr als 70%, insbesondere 90 % und besonders bevorzugt mehr als 97% Reinheit auf.

Die Phosphonsäuregruppen umfassenden Monomere können des weiteren auch in Form von Derivaten eingesetzt werden, die anschließend in die Säure überführt werden können, wobei die Überführung zur Säure auch in polymerisiertem Zustand erfolgen kann. Zu diesen Derivaten gehören insbesondere die Salze, die Ester, die Amide und die Halogenide der Phosphonsäuregruppen umfassenden Monomere.

Die in Schritt A) hergestellte Zusammensetzung umfasst vorzugsweise mindestens 20 Gew.-%, insbesondere mindestens 30 Gew.-% und besonders bevorzugt mindestens 50 Gew.-%, bezogen auf das Gesamtgewicht der Zusammensetzung, Phosphonsäuregruppen umfassende Monomere.

Die in Schritt A) hergestellte Zusammensetzung kann zusätzlich noch weitere organische und/oder anorganische Lösungsmittel enthalten. Zu den organischen Lösungsmitteln gehören insbesondere polar aprotische Lösungsmittel, wie Dimethylsulfoxid (DMSO), Ester, wie Ethylacetat, und polar protische Lösungsmittel, wie Alkohole, wie Ethanol, Propanol, Isopropanol und/oder Butanol. Zu den anorganischen Lösungsmittel zählen insbesondere Wasser, Phosphorsäure und Polyphosphorsäure.

Diese können die Verarbeitbarkeit positiv beeinflussen. Insbesondere kann durch Zugabe des organischen Lösungsmittels die Löslichkeit von Polymeren verbessert werden, die beispielsweise in Schritt B) gebildet werden. Der Gehalt an Phosphonsäuregruppen umfassenden Monomeren in solchen Lösungen beträgt im allgemeinen mindestens 5 Gew.-%, vorzugsweise mindestens 10 Gew.-%, besonders bevorzugt zwischen 10 und 97 Gew.-%.

Gemäß einem besonderen Aspekt der vorliegenden Erfindung können zur Herstellung der Phosphonsäuregruppen umfassenden Polymere und/oder Phosphonsäuregruppen umfassende Ionomere Zusammensetzungen verwendet werden, die Sulfonsäuregruppen umfassende Monomere enthalten.

Sulfonsäuregruppen umfassende Monomere sind in der Fachwelt bekannt. Es handelt sich hierbei um Verbindungen, die mindestens eine Kohlenstoff-Kohlenstoff Doppelbindung und mindestens eine Sulfonsäuregruppe aufweisen. Vorzugsweise weisen die zwei Kohlenstoffatome, die Kohlenstoff-Kohlenstoff-Doppelbindung bilden, mindestens zwei, vorzugsweise 3 Bindungen zu Gruppen auf, die zu einer geringen sterischen Hinderung der Doppelbindung führen. Zu diesen Gruppen gehören unter anderem Wasserstoffatome und Halogenatome, insbesondere Fluoratome. Im Rahmen der vorliegenden Erfindung ergibt sich das Sulfonsäuregruppen umfassende Polymer aus dem Polymerisationsprodukt, das durch Polymerisation des Sulfonsäuregruppen umfassenden Monomers allein oder mit weiteren Monomeren und/oder Vernetzern erhalten wird.

Das Sulfonsäuregruppen umfassende Monomer kann ein, zwei, drei oder mehr Kohlenstoff-Kohlenstoff-Doppelbindungen umfassen. Des weiteren kann das Sulfonsäuregruppen umfassende Monomer ein, zwei, drei oder mehr Sulfonsäuregruppen enthalten.

Im allgemeinen enthält das Sulfonsäuregruppen umfassende Monomer 2 bis 20, vorzugsweise 2 bis 10 Kohlenstoffatome.

Bei dem Sulfonsäuregruppen umfassenden Monomer handelt es sich vorzugsweise um Verbindungen der Formel

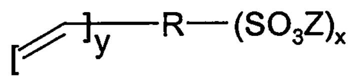

worin

R eine Bindung, eine zweibindige C1-C15-Alkylengruppe, zweibindige C1-C15-Alkylenoxygruppe, beispielsweise Ethylenoxygruppe oder zweibindige C5-C20-Aryl- oder Heteroarylgruppe bedeutet, wobei die vorstehenden Reste ihrerseits mit Halogen, -OH, COOZ, -CN, $NZ_2$ substituiert sein können,

Z unabhängig voneinander Wasserstoff, C1-C15-Alkylgruppe, C1-C15-Alkoxygruppe, beispielsweise Ethylenoxygruppe oder C5-C20-Aryl oder Heteroarylgruppe bedeutet, wobei die vorstehenden Reste ihrerseits mit Halogen, -OH, -CN, substituiert sein können und

x eine ganze Zahl 1, 2, 3, 4, 5, 6, 7, 8, 9 oder 10 bedeutet
y eine ganze Zahl 1, 2, 3, 4, 5, 6, 7, 8, 9 oder 10 bedeutet

und/oder der Formel

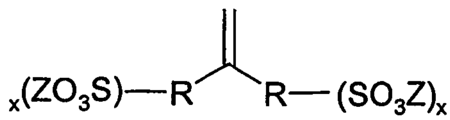

worin

R eine Bindung, eine zweibindige C1-C15-Alkylengruppe, zweibindige C1-C15-Alkylenoxygruppe, beispielsweise Ethylenoxygruppe oder zweibindige C5-C20-Aryl- oder Heteroarylgruppe bedeutet, wobei die vorstehenden Reste ihrerseits mit Halogen, -OH, COOZ, -CN, $NZ_2$ substituiert sein können,
Z unabhängig voneinander Wasserstoff, C1-C15-Alkylgruppe, C1-C15-Alkoxygruppe, beispielsweise Ethylenoxygruppe oder C5-C20-Aryl oder Heteroarylgruppe bedeutet, wobei die vorstehenden Reste ihrerseits mit Halogen, -OH, -CN, substituiert sein können und
x eine ganze Zahl 1, 2, 3, 4, 5, 6, 7, 8, 9 oder 10 bedeutet

und/oder der Formel

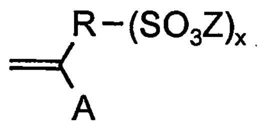

worin

A eine Gruppe der Formeln $COOR^2$, CN, $CONR^2_2$, $OR^2$ und/oder $R^2$ darstellt, worin $R^2$ Wasserstoff, eine C1-C15-Alkylgruppe, C1-C15-Alkoxygruppe, beispielsweise Ethylenoxygruppe oder C5-C20-Aryl oder Heteroarylgruppe bedeutet, wobei die vorstehenden Reste ihrerseits mit Halogen, -OH, COOZ, -CN, $NZ_2$ substituiert sein können
R eine Bindung, eine zweibindige C1-C15-Alkylengruppe, zweibindige C1-C15-Alkylenoxygruppe, beispielsweise Ethylenoxygruppe oder zweibindige C5-C20-Aryl- oder Heteroarylgruppe bedeutet, wobei die vorstehenden Reste ihrerseits mit Halogen, -OH, COOZ, -CN, $NZ_2$ substituiert sein können,
Z unabhängig voneinander Wasserstoff, C1-C15-Alkylgruppe, C1-C15-Alkoxygruppe, beispielsweise Ethylenoxygruppe oder C5-C20-Aryl oder Heteroarylgruppe bedeutet, wobei die vorstehenden Reste ihrerseits mit Halogen, -OH, -CN, substituiert sein können und
x eine ganze Zahl 1, 2, 3, 4, 5, 6, 7, 8, 9 oder 10 bedeutet.

Zu den bevorzugten Sulfonsäuregruppen umfassenden Monomeren gehören unter anderem Alkene, die Sulfonsäuregruppen aufweisen, wie Ethensulfonsäure, Propensulfonsäure, Butensulfonsäure; Acrylsäure- und/oder Methacrylsäure-Verbindungen, die Sulfonsäuregruppen aufweisen, wie beispielsweise 2-Sulfonomethyl-acrylsäure, 2-Sulfonomethyl-methacrylsäure, 2-Sulfonomethylacrylsäureamid und 2-Sulfonomethyl-methacrylsäureamid.

Besonders bevorzugt wird handelsübliche Vinylsulfonsäure (Ethensulfonsäure), wie diese beispielsweise von der Firma Aldrich oder Clariant GmbH erhältlich ist, eingesetzt. Eine bevorzugte Vinylsulfonsäure weist eine Reinheit von mehr als 70%, insbesondere 90 % und besonders bevorzugt mehr als 97% Reinheit auf.

Die Sulfonsäuregruppen umfassenden Monomere können des weiteren auch in Form von Derivaten eingesetzt werden, die anschließend in die Säure überführt werden können, wobei die Überführung zur Säure auch in polymerisiertem Zustand erfolgen kann. Zu diesen Derivaten gehören insbesondere die Salze, die Ester, die Amide und die Halogenide der Sulfonsäuregruppen umfassenden Monomere.

Gemäß einem besonderen Aspekt der vorliegenden Erfindung kann das Gewichtsverhältnis von Sulfonsäuregruppen umfassenden Monomeren zu Phosphonsäuregruppen umfassenden Monomeren im Bereich von 100:1 bis 1:100, vorzugsweise 10:1 bis 1:10 und besonders bevorzugt 2:1 bis 1:2 liegen.

In einer weiteren Ausführungsform der Erfindung können bei der Herstellung der Polymermembran zur Vernetzung befähigte Monomere eingesetzt werden. Diese Monomere können der Zusammensetzung gemäß Schritt A) beigefügt werden. Darüber hinaus können die zur Vernetzung befähigten Monomere auch auf das flächige Gebildes gemäß Schritt C) aufgebracht werden.

Bei den zur Vernetzung befähigten Monomeren handelt es sich insbesondere um Verbindungen, die mindestens 2 Kohlenstoff-Kohlenstoff Doppelbindungen aufweisen. Bevorzugt werden Diene, Triene, Tetraene, Dimethylacrylate, Trimethylacrylate, Tetramethylacrylate, Diacrylate, Triacrylate, Tetraacrylate.

Besonders bevorzugt sind Diene, Triene, Tetraene der Formel

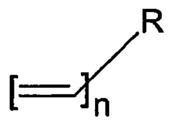

Dimethylacrylate, Trimethylycrylate, Tetramethylacrylate der Formel

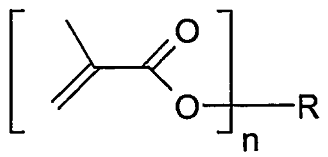

Diacrylate, Triacrylate, Tetraacrylate der Formel

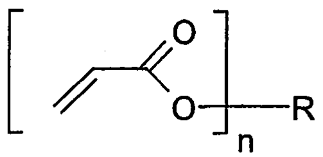

worin

| | |
|---|---|
| R eine | C1-C15-Alkylgruppe, C5-C20-Aryl oder Heteroarylgruppe, NR', $-SO_2$, PR', $Si(R')_2$ bedeutet, wobei die vorstehenden Reste ihrerseits substituiert sein können, |
| R' | unabhängig voneinander Wasserstoff, eine C1-C15-Alkylgruppe, C1-C15-Alkoxygruppe, C5-C20-Aryl oder Heteroarylgruppe bedeutet und |
| n | mindestens 2 ist. |

Bei den Substituenten des vorstehenden Restes R handelt es sich vorzugsweise um Halogen, Hydroxyl, Carboxy, Carboxyl, Carboxylester, Nitrile, Amine, Silyl, Siloxan Reste.

Besonders bevorzugte Vernetzer sind Allylmethacrylat, Ethylenglykoldimethacrylat, Diethylenglykoldimethacrylat, Triethylenglykoldimethacrylat, Tetra- und Polyethylenglykoldimethacrylat, 1,3-Butandioldimethacrylat, Glycerindimethacrylat, Diurethandimethacrylat, Trime.thylpropantrimethacrylat, Epoxyacrylate, beispielsweise Ebacryl, N',N-Methylenbisacrylamid, Carbinol, Butadien, Isopren, Chloropren, Divinylbenzol und/oder Bisphenol-A-dimethylacrylat. Diese Verbindungen sind beispielsweise von Sartomer Company Exton, Pennsylvania unter den Bezeichnungen CN-120, CN104 und CN-980 kommerziell erhältlich.

Der Einsatz von Vernetzern ist optional, wobei diese Verbindungen üblich im Bereich zwischen 0,05 bis 30 Gew.-%, vorzugsweise 0,1 bis 20 Gew.-%, besonders bevorzugt 1 und 10 Gew.-%, bezogen auf das Gewicht-der Phosphonsäuregruppen umfassenden Monomere, eingesetzt werden können.

Die Polymermembranen der vorliegenden Erfindung können neben den Phosphonsäuregruppen umfassenden Polymeren weitere Polymere (B) umfassen, die nicht durch Polymerisation von Phosphonsäuregruppen umfassenden Monomeren erhältlich sind.

Hierzu kann beispielsweise der in Schritt A) erzeugten Zusammensetzung ein weiteres Polymer (B) zugesetzt

werden. Dieses Polymer (B) kann unter anderem gelöst, dispergiert oder suspendiert vorliegen.

Zu den bevorzugten Polymeren (B) gehören unter anderem Polyolefine, wie Poly(chloropren), Polyacetylen, Polyphenylen, Poly(p-xylylen), Polyarylmethylen, Polystyrol, Polymethylstyrol, Polyvinylalkohol, Polyvinylacetat, Polyvinylether, Polyvinylamin, Poly(N-vinylacetamid), Polyvinylimidazol, Polyvinylcarbazol, Polyvinylpyrrolidon, Polyvinylpyridin, Polyvinylchlorid, Polyvinylidenchlorid, Polytetrafluorethylen, Polyvinyldifluorid, Polyhexafluorpropylen, Polyethylentetrafluorethylen, Copolymere von PTFE mit Hexafluoropropylen, mit Perfluorpropylvinylether, mit Trifluoronitrosomethan, mit Carbalkoxyperfluoralkoxyvinylether, Polychlortrifluorethylen, Polyvinylfluorid, Polyvinylidenfluorid, Polyacrolein, Polyacrylamid, Polyacrylnitril, Polycyanacrylate, Polymethacrylimid, Cycloolefinische Copolymere, insbesondere aus Norbornen; Polymere mit C-O-Bindungen in der Hauptkette, beispielsweise Polyacetal, Polyoxymethylen, Polyether, Polypropylenoxid, Polyepichlorhydrin, Polytetrahydrofuran, Polyphenylenoxid, Polyetherketon, Polyetheretherketon, Polyetherketonketon, Polyetheretherketonketon, Polyetherketonetherketonketon , Polyester, insbesondere Polyhydroxyessigsäure, Polyethylenterephthalat, Polybutylenterephthalat, Polyhydroxybenzoat, Polyhydroxypropionsäure, Polypropionsäure, Polypivalolacton, Polycaprolacton, Furan-Harze, Phenol-Aryl-Harze, Polymalonsäure, Polycarbonat; Polymere C-S-Bindungen in der Hauptkette, beispielsweise Polysulfidether, Polyphenylensulfid, Polyethersulfon, Polysulfon, Polyetherethersulfon, Polyarlyethersulfon, Polyphenylensulfon, Polyphenylensulfidsulfon, Poly(phenylsulfid-1,4-phenylen; Polymere C-N-Bindungen in der Hauptkette, beispielsweise Polyimine, Polyisocyanide, Polyetherimin, Polyetherimide, Poly(trifluoro-methyl-bis(phthalimid)-phenyl, Polyanilin, Polyaramide, Polyamide, Polyhydrazide, Polyurethane, Polyimide, Polyazole, Polyazoletherketon, Polyharnstoffe, Polyazine; Flüssigkristalline Polymere, insbesondere Vectra sowie Anorganische Polymere, beispielsweise Polysilane, Polycarbosilane, Polysiloxane, Polykieselsäure, Polysilikate, Silicone, Polyphosphazene und Polythiazyl. Diese Polymere können einzeln oder als Mischung von zwei, drei oder mehreren Polymeren eingesetzt werden.

Besonders bevorzugt sind Polymere die mindestens ein Stickstoffatom, Sauerstoffatom und/oder Schwefelatom in einer Wiederholungseinheit enthalten. Insbesondere bevorzugt sind Polymere, die mindestens einen aromatischen Ring mit mindestens einem Stickstoff-, Sauerstoff- und/oder Schwefelheteroatom pro Wiederholungseinheit enthalten. Innerhalb dieser Gruppe sind insbesondere Polymere auf Basis von Polyazolen bevorzugt. Diese basischen Polyazol-Polymere enthalten mindestens einen aromatischen Ring mit mindestens einem Stickstoffheteroatom pro Wiederholungseinheit.

Bei dem aromatischen Ring handelt es sich vorzugsweise um einen fünf- oder sechsgliedrigen Ring mit eins bis drei Stickstoffatomen, der mit einem anderen Ring, insbesondere einem anderen aromatischen Ring, anelliert sein kann.

Hierbei sind Polyazole besonders bevorzugt. Polymere auf Basis von Polyazol enthalten im allgemeinen wiederkehrende Azoleinheiten der allgemeinen Formel (I) und/oder (II) und/oder (III) und/oder (IV) und/oder (V) und/oder (VI) und/oder (VII) und/oder (VIII) und/oder (IX) und/oder (X) und/oder (XI) und/oder (XII) und/oder (XIII) und/oder (XIV) und/oder (XV) und/oder (XVI) und/oder (XVI) und/oder (XVII) und/oder (XVIII) und/oder (XIX) und/oder (XX) und/oder (XXI) und/oder (XXII)

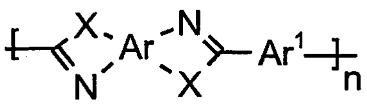

(I)

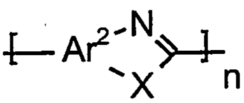

(II)

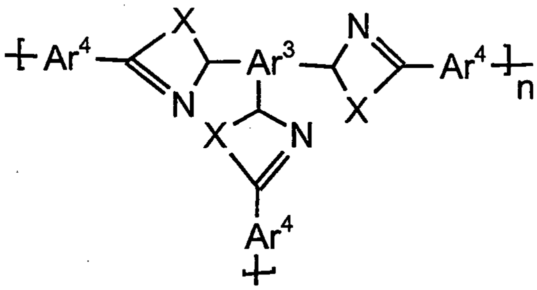

(III)

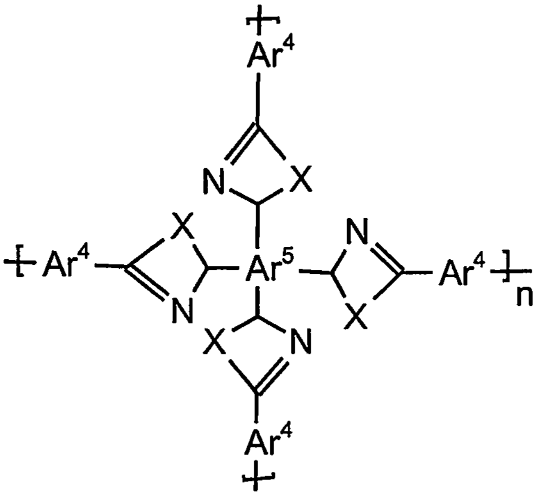

(IV)

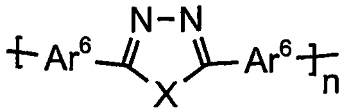

(V)

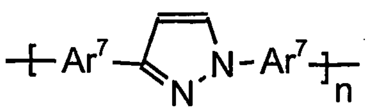

(VI)

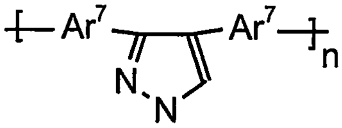

(VII)

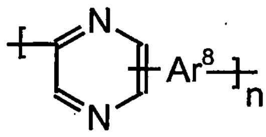

(VIII)

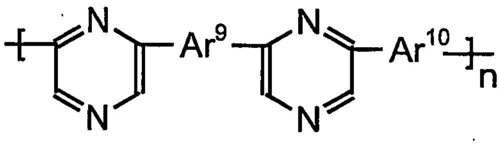

(IX)

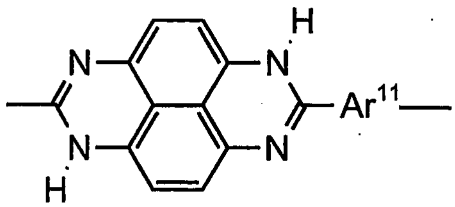

(X)

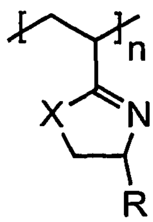

(XI)

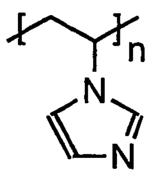

(XII)

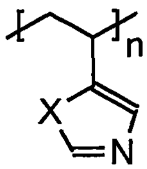

(XIII)

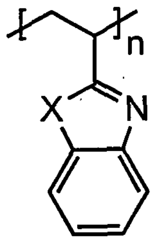

(XIV)

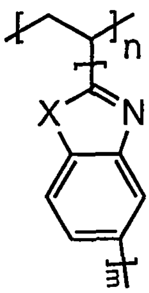

(XV)

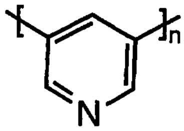

(XVI)

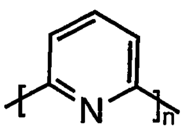

(XVII)

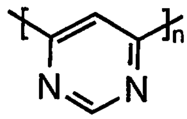

(XVIII)

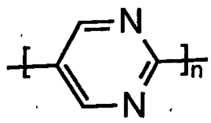

(XIX)

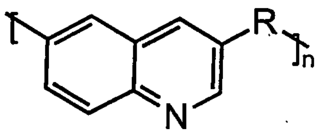

(XX)

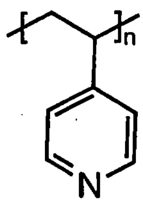

(XXI)

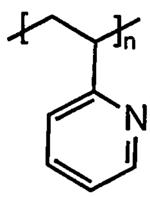

(XXII)

worin

- Ar gleich oder verschieden sind und für eine vierbindige aromatische oder heteroaromatische Gruppe stehen, die ein- oder mehrkernig sein kann,
- $Ar^1$ gleich oder verschieden sind und für eine zweibindige aromatische oder heteroaromatische Gruppe stehen, die ein- oder mehrkernig sein kann,
- $Ar^2$ gleich oder verschieden sind und für eine zwei oder dreibindige aromatische oder heteroaromatische Gruppe stehen, die ein- oder mehrkernig sein kann,
- $Ar^3$ gleich oder verschieden sind und für eine dreibindige aromatische oder heteroaromatische Gruppe stehen, die

ein- oder mehrkernig sein kann,

$Ar^4$ gleich oder verschieden sind und für eine dreibindige aromatische oder heteroaromatische Gruppe stehen, die ein- oder mehrkernig sein kann,

$Ar^5$ gleich oder verschieden sind und für eine vierbindige aromatische oder heteroaromatische Gruppe stehen, die ein- oder mehrkernig sein kann,

$Ar^6$ gleich oder verschieden sind und für eine zweibindige aromatische oder heteroaromatische Gruppe stehen, die ein- oder mehrkernig sein kann,

$Ar^7$ gleich oder verschieden sind und für eine zweibindige aromatische oder heteroaromatische Gruppe stehen, die ein- oder mehrkernig sein kann,

$Ar^8$ gleich oder verschieden sind und für eine dreibindige aromatische oder heteroaromatische Gruppe stehen, die ein- oder mehrkernig sein kann,

$Ar^9$ gleich oder verschieden sind und für eine zwei- oder drei- oder vierbindige aromatische oder heteroaromatische Gruppe stehen, die ein- oder mehrkernig sein kann,

$Ar^{10}$ gleich oder verschieden sind und für eine zwei- oder dreibindige aromatische oder heteroaromatische Gruppe stehen, die ein- oder mehrkernig sein kann,

$Ar^{11}$ gleich oder verschieden sind und für eine zweibindige aromatische oder heteroaromatische Gruppe stehen, die ein- oder mehrkernig sein kann,

X gleich oder verschieden ist und für Sauerstoff, Schwefel oder eine Aminogruppe, die ein Wasserstoffatom, eine 1- 20 Kohlenstoffatome aufweisende Gruppe, vorzugsweise eine verzweigte oder nicht verzweigte Alkyl- oder Alkoxygruppe, oder eine Arylgruppe als weiteren Rest trägt

R gleich oder verschieden für Wasserstoff, eine Alkylgruppe und eine aromatische Gruppe steht gleich oder verschieden für Wasserstoff, eine Alkylgruppe und eine aromatische Gruppe steht mit der Maßgabe, dass R in Formel XX eine divalente Gruppe ist, und

n, m eine ganze Zahl größer gleich 10, bevorzugt größer gleich 100 ist.

Bevorzugte aromatische oder heteroaromatische Gruppen leiten sich von Benzol, Naphthalin, Biphenyl, Diphenylether, Diphenylmethan, Diphenyldimethylmethan, Bisphenon, Diphenylsulfon, Thiophen, Furan, Pyrrol, Thiazol, Oxazol, Imidazol, Isothiazol, Isoxazol, Pyrazol, 1,3,4-Oxadiazol, 2,5-Diphenyl-1,3,4-oxadiazol, 1,3,4-Thiadiazol, 1,3,4-Triazol, 2,5-Diphenyl-1,3,4-triazol, 1,2,5-Triphenyl-1,3,4-triazol, 1,2,4-Oxadiazol, 1,2,4-Thiadiazol, 1,2,4-Triazol, 1,2,3-Triazol, 1,2,3,4-Tetrazol, Benzo[b]thiophen, Benzo[b]furan, Indol, Benzo[c]thiophen, Benzo[c]furan, Isoindol, Benzoxazol, Benzothiazol, Benzimidazol, Benzisoxazol, Benzisothiazol, Benzopyrazol, Benzothiadiazol, Benzotriazol, Dibenzofuran, Dibenzothiophen, Carbazol, Pyridin, Bipyridin, Pyrazin, Pyrazol, Pyrimidin, Pyridazin, 1,3,5-Triazin, 1,2,4-Triazin, 1,2,4,5-Triazin, Tetrazin, Chinolin, Isochinolin, Chinoxalin, Chinazolin, Cinnolin, 1,8-Naphthyridin, 1,5-Naphthyridin, 1,6-Naphthyridin, 1,7-Naphthyridin, Phthalazin, Pyridopyrimidin, Purin, Pteridin oder Chinolizin, 4H-Chinolizin, Diphenylether, Anthracen, Benzopyrrol, Benzooxathiadiazol, Benzooxadiazol, Benzopyridin, Benzopyrazin, Benzopyrazidin, Benzopyrimidin, Benzotriazin, Indolizin, Pyridopyridin, Imidazopyrimidin, Pyrazinopyrimidin, Carbazol, Aciridin, Phenazin, Benzochinolin, Phenoxazin, Phenothiazin, Acridizin, Benzopteridin, Phenanthrolin und Phenanthren ab, die gegebenenfalls auch substituiert sein können.

Dabei ist das Substitionsmuster von $Ar^1$, $Ar^4$, $Ar^6$, $Ar^7$, $Ar^8$, $Ar^9$, $Ar^{10}$, $Ar^{11}$ beliebig, im Falle vom Phenylen beispielsweise kann $Ar^1$, $Ar^4$, $Ar^6$, $Ar^7$, $Ar^8$, $Ar^9$, $Ar^{10}$, $Ar^{11}$ ortho-, meta- und para-Phenylen sein. Besonders bevorzugte Gruppen leiten sich von Benzol und Biphenylen, die gegebenenfalls auch substituiert sein können, ab.

Bevorzugte Alkylgruppen sind kurzkettige Alkylgruppen mit 1 bis 4 Kohlenstoffatomen, wie z. B. Methyl-, Ethyl-, n- oder i-Propyl- und t-Butyt-Gruppen.

Bevorzugte aromatische Gruppen sind Phenyl- oder Naphthyl-Gruppen. Die Alkylgruppen und die aromatischen Gruppen können substituiert sein.

Bevorzugte Substituenten sind Halogenatome wie z. B. Fluor, Aminogruppen, Hydroxygruppen oder kurzkettige Alkylgruppen wie z. B. Methyl- oder Ethylgruppen.

Bevorzugt sind Polyazole mit wiederkehrenden Einheiten der Formel (I) bei denen die Reste X innerhalb einer wiederkehrenden Einheit gleich sind.

Die Polyazole können grundsätzlich auch unterschiedliche wiederkehrende Einheiten aufweisen, die sich beispielsweise in ihrem Rest X unterscheiden. Vorzugsweise jedoch weist es nur gleiche Reste X in einer wiederkehrenden Einheit auf.

Weitere bevorzugte Polyazol-Polymere sind Polyimidazole, Polybenzthiazole, Polybenzoxazole, Polyoxadiazole, Polyquinoxalines, Polythiadiazole Poly(pyridine), Poly(pyrimidine), und Poly(tetrazapyrene).

In einer weiteren Ausführungsform der vorliegenden Erfindung ist das Polymer enthaltend wiederkehrende Azoleinheiten ein Copolymer oder ein Blend, das mindestens zwei Einheiten der Formel (I) bis (XXII) enthält, die sich voneinander unterscheiden. Die Polymere können als Blockcopolymere (Diblock, Triblock), statistische Copolymere, periodische Copolymere und/oder alternierende Polymere vorliegen.

In einer besonders bevorzugten Ausführungsform der vorliegenden Erfindung ist das Polymer enthaltend wiederkehrende Azoleinheiten ein Polyazol, das nur Einheiten der Formel (I) und/oder (II) enthält.

Die Anzahl der wiederkehrende Azöleinheiten im Polymer ist vorzugsweise eine ganze Zahl größer gleich 10. Besonders bevorzugte Polymere enthalten mindestens 100 wiederkehrende Azoleinheiten.

Im Rahmen der vorliegenden Erfindung sind Polymere enthaltend wiederkehrenden Benzimidazoleinheiten bevorzugt. Einige Beispiele der äußerst zweckmäßigen Polymere enthaltend wiederkehrenden Benzimidazoleinheiten werden durch die nachfolgende Formeln wiedergegeben:

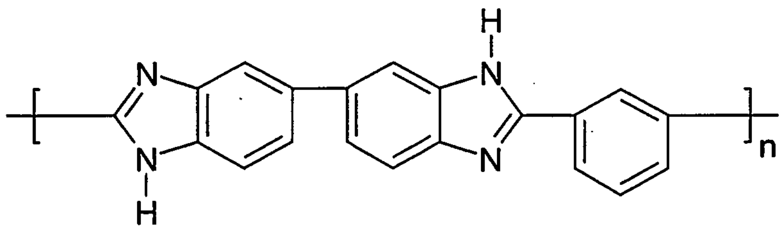

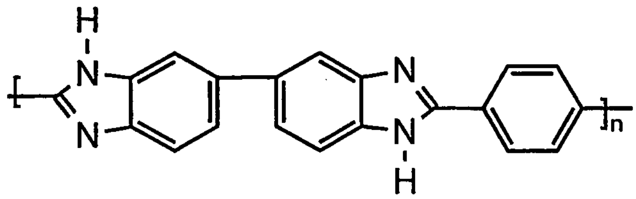

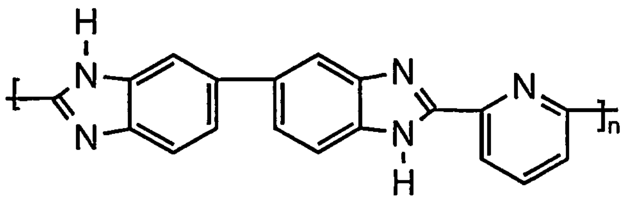

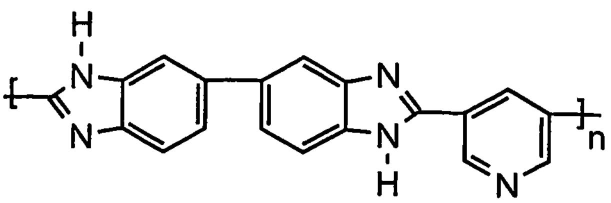

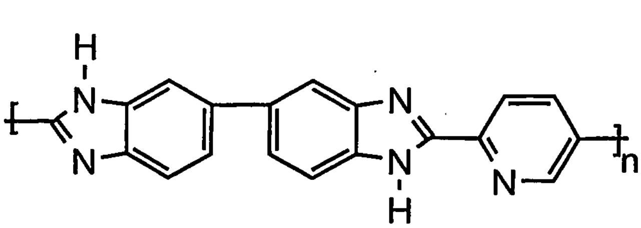

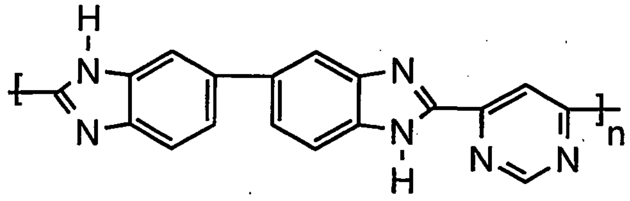

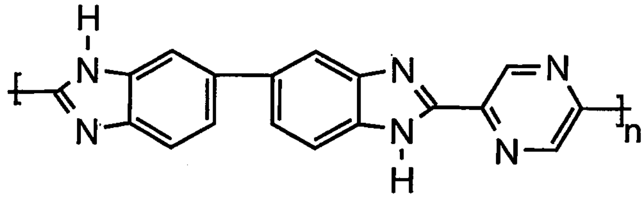

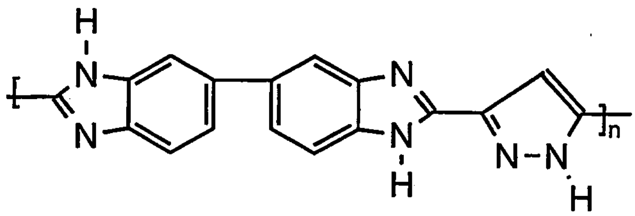

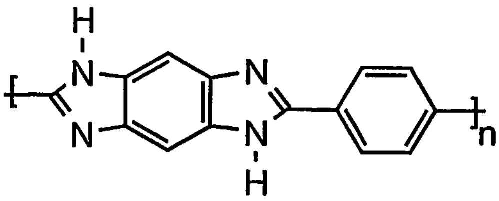

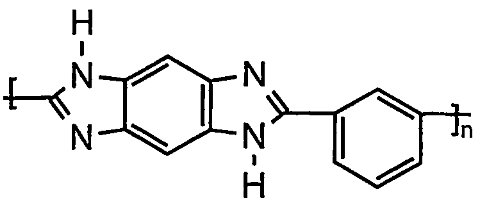

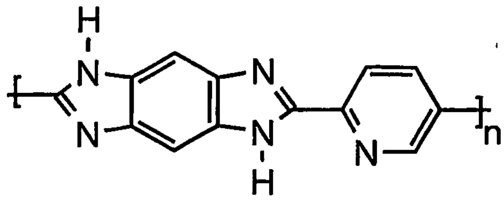

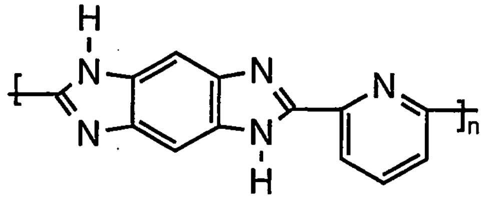

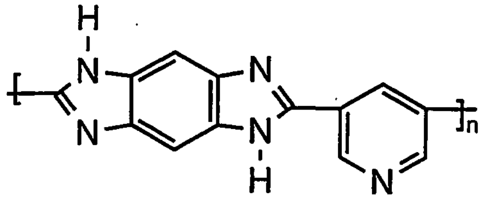

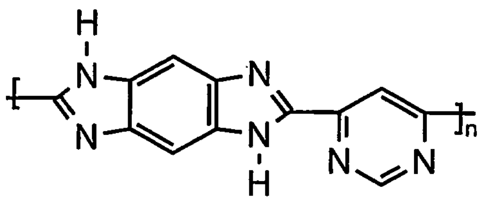

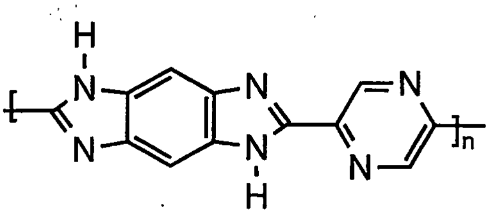

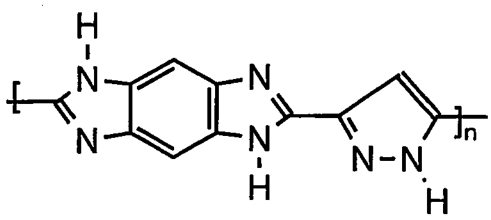

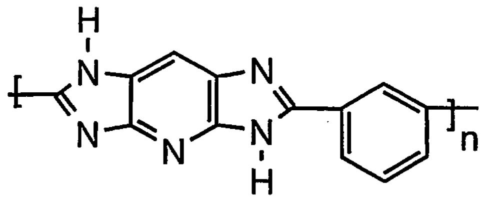

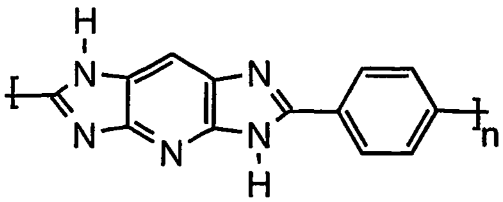

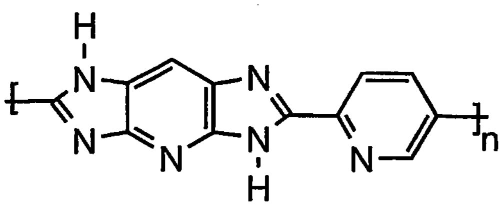

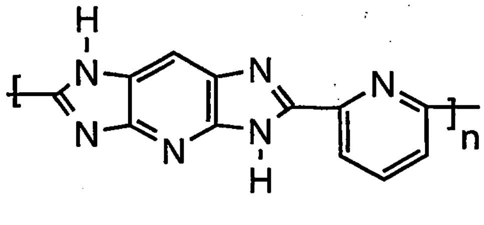

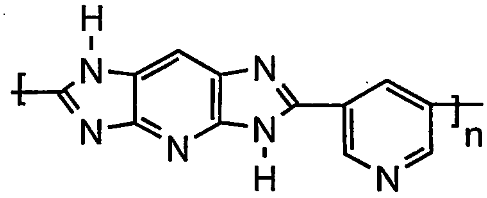

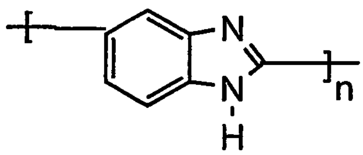

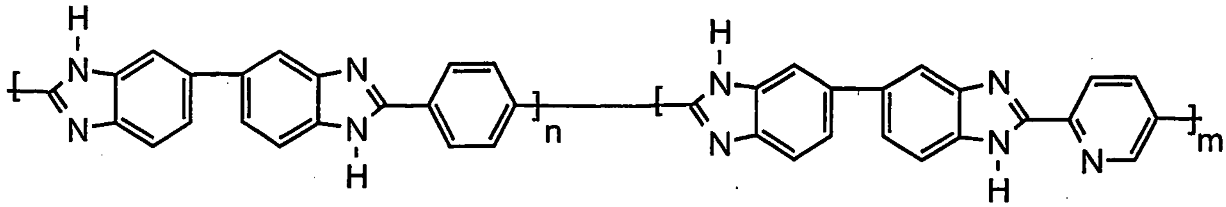

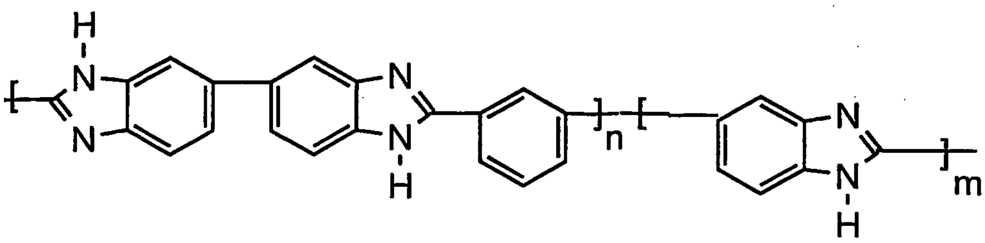

wobei n und m eine ganze Zahl größer gleich 10, vorzugsweise größer gleich 100 ist.

Weitere bevorzugte Polyazol-Polymere sind Polyimidazole, Polybenzimidazoletherketon, Polybenzthiazole, Polybenzoxazole, Polytriazole, Polyoxadiazole, Polythiadiazole, Polypyrazole, Polyquinoxalines, Poly(pyridine), Poly (pyrimidine), und Poly(tetrazapyrene).

Bevorzugte Polyazole zeichnen sich durch ein hohes Molekulargewicht aus. Dies gilt insbesondere für die Polybenzimidazole. Gemessen als Intrinsische Viskosität beträgt diese vorzugsweise mindestens 0,2 dl/g, bevorzugt 0,7 bis 10 dl/g, insbesondere 0,8 bis 5 dl/g.

Besonders bevorzugt ist Celazole der Fa. Celanese. Die Eigenschaften der Polymerfolie und Polymermembran können durch Sieben des Ausgangspolymers, wie in der deutschen Patentanmeldung Nr. 10129458.1 beschrieben, verbessert werden.

Darüber hinaus können Polymer mit aromatischen Sulfonsäuregruppen als Polymer (B) eingesetzt werden. Aromatische Sulfonsäuregruppen sind Gruppen, bei denen die Sulfonsäuregruppe ($-SO_3H$) kovalent an eine aromatischen oder heteroaromatischen Gruppe gebunden ist. Die aromatische Gruppe kann ein Teil der Hauptkette (back bone) des Polymeren oder ein Teil einer Seitengruppe sein, wobei Polymere mit aromatischen Gruppen in der Hauptkette bevorzugt sind. Die Sulfonsäuregruppen können vielfach auch in Form der Salze eingesetzt werden. Des weiteren können auch Derivate, beispielsweise Ester, insbesondere Methyl- oder Ethylester, oder Halogenide der Sulfonsäuren verwendet werden, die beim Betrieb der Membran in die Sulfonsäure umgesetzt werden.

Die mit Sulfonsäuregruppen modifizierten Polymere besitzen vorzugsweise einen Gehalt an Sulfonsäuregruppen im Bereich von 0,5 bis 3 meq/g, vorzugsweise 0,5 bis 2,5. Dieser Wert wird über die sog. Ionenaustauschkapazität

(IEC) bestimmt.

Zur Messung der IEC werden die Sulfonsäuregruppen in die freie Säure überführt. Hierzu wird das Polymere auf bekannte Weise mit Säure behandelt, wobei überschüssige Säure durch Waschen entfernt wird. So wird das sulfonierte Polymer zunächst 2 Stunden in siedendem Wasser behandelt. Anschliessend wird überschüssiges Wasser abgetupt und die Probe während 15 Stunden bei 160°C im Vakkumtrockenschrank bei p<1 mbar getrocknet. Dann wird das Trockengewicht der Membran bestimmt. Das so getrocknete Polymer wird dann in DMSO bei 80°C während 1 h gelöst. Die Lösung wird anschliessend mit 0,1 M NaOH titriert. Aus dem Verbrauch der Säure bis zum Equivalentpunkt und dem Trockengewicht wird dann die Ionenaustauschkapazität (IEC) berechnet.

Polymere mit an aromatische Gruppen kovalent gebundene Sulfonsäuregruppen sind in der Fachwelt bekannt. So können Polymer mit aromatischen Sulfonsäuregruppen beispielsweise durch Sulfonierung von Polymeren hergestellt werden. Verfahren zur Sulfonierung von Polymeren sind in F. Kucera et. al. Polymer Engineering and Science1988, Vol. 38, No 5, 783-792 beschrieben. Hierbei können die Sulfonierungsbedingungen so gewählt werden, dass ein niedriger Sulfonierungsgrad entsteht (DE-A-19959289).

Im Hinblick auf Polymere mit aromatischen Sulfonsäuregruppen, deren aromatische Reste Teil der Seitengruppe sind, sei insbesondere auf Polystyrolderivate verwiesen. So beschreibt die Druckschrift US-A-6110616 Copolymere aus Butadien und Styrol und deren anschließende Sulfonierung zur Verwendung für Brennstoffzellen.

Des weiteren können derartige Polymere auch durch Polyreaktionen von Monomeren erhalten werden, die Säuregruppen umfassen. So können perfluorinierte Polymere wie in US-A-5422411 beschrieben durch Copolymerisation aus Trifluorostyrol und sulfonylmodifiziertem Trifuorostyrol hergestellt werden.

Gemäß einem besonderen Aspekt der vorliegenden Erfindung werden hochtemperaturstabile Thermoplaste eingesetzt, die an aromatische Gruppen gebundene Sulfonsäuregruppen aufweisen. Im allgemeinen weisen derartige Polymere in der Hauptkette aromatische Gruppen auf. So sind sulfonierte Polyetherketone (DE-A-4219077, WO96/01177), sulfonierte Polysulfone (J. Membr. Sci. 83 (1993) p.211) oder sulfoniertes Polyphenylensulfid (DE-A-19527435) bevorzugt.

Die zuvor dargelegten Polymere mit an Aromaten gebundenen Sulfonsäuregruppen können einzeln oder als Mischung eingesetzt werden, wobei insbesondere Mischungen bevorzugt sind, die Polymere mit Aromaten in der Hauptkette aufweisen.

Zu den bevorzugten Polymeren gehören Polysulfone, insbesondere Polysulfon mit Aromaten in der Hauptkette. Gemäß einem besonderen Aspekt der vorliegenden Erfindung weisen bevorzugte Polysulfone und Polyethersulfone eine Schmelzvolumenrate MVR 300/21,6 kleiner oder gleich 40 $cm^3$/10 min, insbesondere kleiner oder gleich 30 $cm^3$/10 min und besonders bevorzugt kleiner oder gleich 20 $cm^3$/10 min gemessen nach ISO 1133 auf.

Gemäß einem besonderen Aspekt der vorliegenden Erfindung kann das Gewichtsverhältnis von Polymer mit an aromatische Gruppen kovalent gebundene Sulfonsäuregruppen zu Phosphonsäuregruppen umfassenden Monomeren im Bereich von 0,1 bis 50, vorzugsweise von 0,2 bis 20, besonders bevorzugt von 1 bis 10 liegen.

Zu den bevorzugten Polymeren gehören Polysulfone, insbesondere Polysulfon mit aromatischen und/oder heteroaromatischen Gruppen in der Hauptkette. Gemäß einem besonderen Aspekt der vorliegenden Erfindung weisen bevorzugte Polysulfone und Polyethersulfone eine Schmelzvolumenrate MVR 300/21,6 kleiner oder gleich 40 $cm^3$/10 min, insbesondere kleiner oder gleich 30 $cm^3$/10 min und besonders bevorzugt kleiner oder gleich 20 $cm^3$/10 min gemessen nach ISO 1133 auf. Hierbei sind Polysulfone mit einer Vicat-Erweichungstemperatur VST/A/50 von 180°C bis 230°C bevorzugt. In noch einer bevorzugten Ausführungsform der vorliegenden Erfindung ist das Zahlenmittel des Molekulargewichts von den Polysulfonen größer als 30.000 g/mol.

Zu den Polymeren auf Basis von Polysulfon gehören insbesondere Polymere, welche wiederkehrende Einheiten mit verknüpfenden Sulfon-Gruppen entsprechend den Allgemeinen Formeln A, B, C, D, E, F und/oder G aufweisen:

$$-O-R-SO_2-R- \quad (A)$$

$$-O-R-SO_2-R-O-R- \quad (B)$$

$$-O-R-SO_2-R-O-R-R- \quad (C)$$

(D)

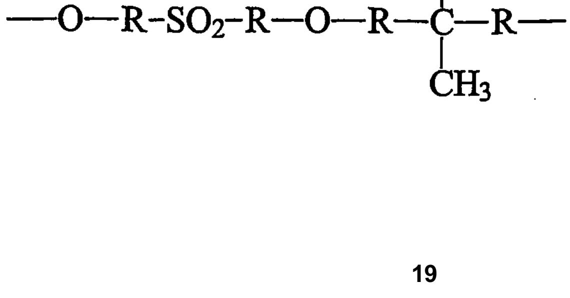

$-O-R-SO_2-R-R-SO_2-R-$ (E)

$-O-R-SO_2-R-R-SO_2-R-O-R-SO_2-]$ (F)

$[O-R-SO_2-R]-[SO_2-R-R]$ (G)

worin die Reste R unabhängig voneinander gleich oder verschieden eine aromatische oder heteroaromatische Gruppen darstellen, wobei diese Reste zuvor näher erläutert wurden. Hierzu gehören insbesondere 1,2-Phenylen, 1,3-Phenylen, 1,4-Phenylen, 4,4'-Biphenyl, Pyridin, Chinolin, Naphthalin, Phenanthren.

Zu den im Rahmen der vorliegenden Erfindung bevorzugten Polysulfone gehören Homo- und Copolymere, beispielsweise statistische Copolymere. Besonders bevorzugte Polysulfone umfassen wiederkehrende Einheiten der Formeln H bis N:

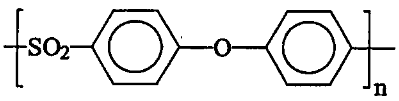

(H)

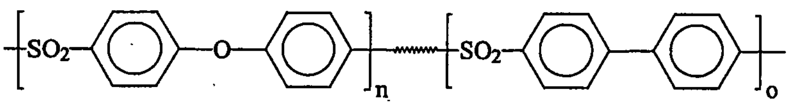

(I)

mit n > o

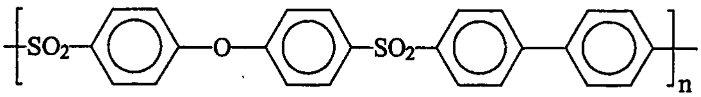

(J)

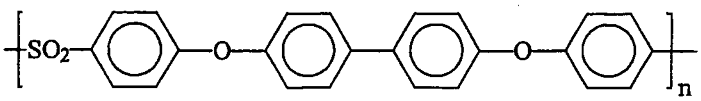

(K)

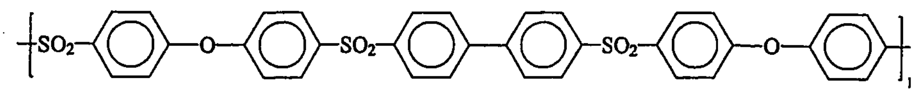

(L)

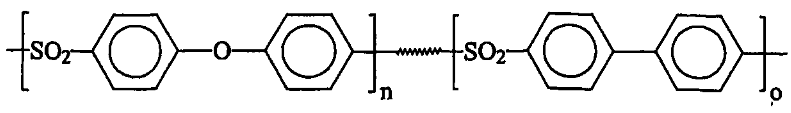

(M)

mit n < o

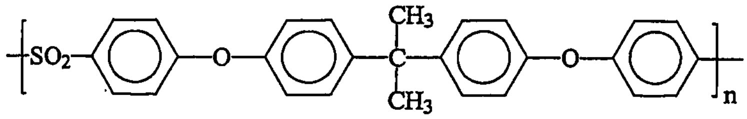

(N)

Die zuvor beschriebenen Polysulfone können unter den Handelsnamen ®Victrex 200 P, ®Victrex 720 P, ®Ultrason E, ®Ultrason S, ®Mindel, ®Radel A, ®Radel R, ®Victrex HTA, ®Astrel und ®Udel kommerziell erhalten werden.

Darüber hinaus sind Polyetherketone, Polyetherketonketone, Polyetheretherketone, Polyetheretherketonketone und Polyarylketone besonders bevorzugt. Diese Hochleistungspolymere sind an sich bekannt und können unter den Handelsnamen Victrex® PEEK™, ®Hostatec, ®Kadel kommerziell erhalten werden.

Gemäß einem besonderen Aspekt der vorliegenden Erfindung sind bevorzugte protonenleitende Polymermembran erhältlich durch ein Verfahren umfassend die Schritte

I) Quellen einer Polymerfolie mit einer Flüssigkeit, die Phosphonsäuregruppen umfassende Monomere enthält, und
II) Polymerisation mindestens eines Teils der Phosphonsäuregruppen umfassenden Monomeren,die in Schritt I) in die Polymerfolie eingebracht wurden.

Als Quellung wird eine Gewichtszunahme der Folie von mindestens 3 Gew.-% verstanden. Bevorzugt beträgt die Quellung mindestens 5 %, besonders bevorzugt mindestens 10%.

Bestimmung der Quellung Q wird gravimetrisch bestimmt aus der Masse des Filmes vor der Quellung $m_0$ und der Masse des Filmes nach der Polymerisation gemäß Schritt B), $m_2$.

$$Q = (m_2-m_0)/m_0 \times 100$$

Die Quellung erfolgt vorzugsweise bei einer Temperatur oberhalb 0°C, insbesondere zwischen Raumtemperatur (20°C) und 180°C in einer Flüssigkeit, die vorzugsweise mindestens 5 Gew.-% Phosphonsäuregruppen umfassende Monomere enthält. Des weiteren kann die Quellung auch bei erhöhtem Druck durchgeführt werden. Hierbei ergeben sich die Grenzen aus wirtschaftlichen Überlegungen und technischen Möglichkeiten.

Die zur Quellung eingesetzte Polymerfolie weist im allgemeinen eine Dicke im Bereich von 5 bis 3000μm, vorzugsweise 10 bis 1500 μm und besonders bevorzugt 20 bis 500μm auf. Die Herstellung derartiger Folien aus Polymeren ist im allgemeinen bekannt, wobei diese teilweise kommerziell erhältlich sind.

Die Flüssigkeit, die Phosphonsäuregruppen umfassende Monomere enthält, kann eine Lösung darstellen, wobei die Flüssigkeit auch suspendierte und/oder dispergierte Bestandteile enthalten kann. Die Viskosität der Flüssigkeit, die Phosphonsäuregruppen umfassende Monomere enthält, kann in weiten Bereichen liegen, wobei zur Einstellung der Viskosität eine Zugabe von Lösungsmitteln oder eine Temperaturerhöhung erfolgen kann. Vorzugsweise liegt die dynamische Viskosität im Bereich von 0,1 bis 10000 mPa*s, insbesondere 0,2 bis 2000 mPa*s, wobei diese Werte beispielsweise gemäß DIN 53015 gemessen werden können.

Die in Schritt A) hergestellte Zusammensetzung oder die in Schritt I) verwendete Flüssigkeit kann zusätzlich noch weitere organische und/oder anorganische Lösungsmittel enthalten. Zu den organischen Lösungsmitteln gehören insbesondere polar aprotische Lösungsmittel, wie Dimethylsulfoxid (DMSO), Ester, wie Ethylacetat, und polar protische Lösungsmittel, wie Alkohole, wie Ethanol, Propanol, Isopropanol und/oder Butanol. Zu den anorganischen Lösungsmittel zählen insbesondere Wasser, Phosphorsäure und Polyphosphorsäure. Diese können die Verarbeitbarkeit positiv beeinflussen. So kann beispielsweise die Rheologie der Lösung verbessert werden, so dass diese leichter extrudiert oder gerakelt werden kann.

Zur weiteren Verbesserung der anwendungstechnischen Eigenschaften können der Membran zusätzlich noch

Füllstoffe, insbesondere protonenleitende Füllstoffe, sowie zusätzliche Säuren zugesetzt werden. Derartige Stoffe weisen vorzugsweise eine Eigenleitfähigkeit bei 100°C mindestens $10^{-6}$ S/cm, insbesondere $10^{-5}$ S/cm auf. Die Zugabe kann beispielsweise bei Schritt A) und/oder Schritt B) bzw. Schritt I) erfolgen. Des weiteren können diese Additive, falls diese in flüssiger Form vorliegen, auch nach der Polymerisation gemäß Schritt C) bzw. Schritt II) beigefügt werden.

Nicht limitierende Beispiele für Protonenleitende Füllstoffe sind

| | |
|---|---|
| Sulfate wie: | $CsHSO_4$, $Fe(SO_4)_2$, $(NH_4)_3H(SO_4)_2$, $LiHSO_4$, $NaHSO_4$, $KHSO_4$, $RbSO_4$, $LiN_2H_5SO_4$, $NH_4HSO_4$, |
| Phosphate wie | $Zr_3(PO_4)_4$, $Zr(HPO_4)_2$, $HZr_2(PO_4)_3$, $UO_2PO_4.3H_2O$, $H_8UO_2PO_4$, $Ce(HPO_4)_2$, $Ti(HPO_4)_2$, $KH_2PO_4$, $NaH_2PO_4$, $LiH_2PO_4$, $NH_4H_2PO_4$, $CsH_2PO_4$, $CaHPO_4$, $MgHPO_4$, $HSbP_2O_8$, $HSb_3P_2O_{14}$, $H_5Sb_5P_2O_{20}$, |
| Polysäuren wie | $H_3PW_{12}O_{40}.nH_2O$ (n=21-29), $H_3SiW_{12}O_{40}.nH_2O$ (n=21-29), $H_xWO_3$, $HSbWO_6$, $H_3PMo_{12}O_{40}$, $H_2Sb_4O_{11}$, $HTaWO_6$, $HNbO_3$, $HTiNbO_5$, $HTiTaO_5$, $HSbTeO_6$, $H_5Ti_4O_9$, $HSbO_3$, $H_2MoO_4$ |
| Selenite und Arsenite wie | $(NH_4)_3H(SeO_4)_2$, $UO_2AsO_4$, $(NH_4)_3H(SeO_4)_2$, $KH_2AsO_4$, $Cs_3H(SeO_4)_2$, $Rb_3H(SeO_4)_2$, |
| Phosphide | ZrP, TiP, HfP |
| Oxide wie | $Al_2O_3$, $Sb_2O_5$, $ThO_2$, $SnO_2$, $ZrO_2$, $MoO_3$ |
| Silikate wie | Zeolithe, Zeolithe($NH_4$+), Schichtsilikate, Gerüstsilikate, H-Natrolite, H-Mordenite, $NH_4$-Analcine, $NH_4$-Sodalite, $NH_4$-Gallate, H-Montmorillonite |
| Säuren wie | $HClO_4$, $SbF_5$ |
| Füllstoffe wie | Carbide, insbesondere SiC, $Si_3N_4$, Fasern, insbesondere Glasfasern, Glaspulvern und/oder Polymerfasern, bevorzugt auf Basis von Polyazolen. |

Diese Additive können in der protonenleitenden Polymermembran in üblichen Mengen enthalten sein, wobei jedoch die positiven Eigenschaften, wie hohe Leitfähigkeit, hohe Lebensdauer und hohe mechanische Stabilität der Membran durch Zugabe von zu großen Mengen an Additiven nicht allzu stark beeinträchtigt werden sollten. Im allgemeinen umfaßt die Membran nach der Polymerisation gemäß Schritt C) bzw. Schritt II) höchstens 80 Gew.-%, vorzugsweise höchstens 50 Ges.-% und besonders bevorzugt höchstens 20 Gew.-% Additive.

Als weiteres kann diese Membran auch perfluorierte Sulfonsäure-Additive (vorzugsweise 0,1-20 Gew.-%, bevorzugt 0,2-15 Gew.-%, ganz bevorzugt 0,2-10 Gew.-%) enthalten. Diese Additive führen zur Leistungsverbesserung, in der Nähe der Kathode zur Erhöhung der Sauerstofflöslichkeit und Sauerstoffdiffusion und zur Verringerung der Adsorption des Elektrolyten auf der Katalysatoroberfläche. (Electrolyte additives for phosphoric acid fuel cells. Gang, Xiao; Hjuler, H. A.; Olsen, C.; Berg, R. W.; Bjerrum, N. J.. Chem. Dep. A, Tech. Univ. Denmark, Lyngby, Den. J. Electrochem. Soc. (1993), 140(4), 896-902 und Perfluorosulfonimide as an additive in phosphoric acid fuel cell. Razaq, M.; Razaq, A.; Yeager, E.; DesMarteau, Darryl D.; Singh, S. Case Cent. Electrochem. Sci., Case West. Reserve Univ., Cleveland, OH, USA. J. Electrochem. Soc. (1989), 136(2), 385-90.)

Nicht limitierende Beispiele für perfluorierte Sulfonsäureadditive sind: Trifluomethansulfonsäure, Kaliumtrifluormethansulfonat, Natriumtrifluormethansulfonat, Lithiumtrifluormethansulfonat, Ammoniumtrifluormethansulfonat, Kaliumperfluorohexansulfonat, Natriumperfluorohexansulfonat, Lithiumperfluorohexansulfonat, Ammoniumperfluorohexansulfonat, Perfluorohexansulfonsäure, Kaliumnonafluorbutansulfonat, Natriumnonafluorbutansulfonat, Lithiumnonafiuorbutansulfonat, Ammoniumnonafluorbutansulfonat, Cäsiumnonafluorbutansulfonat, Triethylammöniumperfluorohexasulfonat und Perflurosulfoimide.

Die Bildung des flächigen Gebildes gemäß Schritt B) erfolgt mittels an sich bekannter Maßnahmen (Gießen, Sprühen, Rakeln, Extrusion) die aus dem Stand der Technik zur Polymerfilm-Herstellung bekannt sind. Als Träger sind alle unter den Bedingungen als inert zu bezeichnenden Träger geeignet. Zu diesen Trägern gehören insbesondere Folien aus Polyethylenterephthalat (PET), Polytetrafluorethylen (PTFE), Polyhexafluorpropylen, Copolymere von PTFE mit Hexafluoropropylen, Polyimiden, Polyphenylensulfiden (PPS) und Polypropylen (PP).

Die Dicke des flächigen Gebildes gemäß Schritt B) beträgt vorzugsweise zwischen 10 und 4000 $\mu$m, vorzugsweise zwischen 15 und 3500 $\mu$m, insbesondere zwischen 20 und 3000 $\mu$m, besonders bevorzugt zwischen 30 und 1500$\mu$m und ganz besonders bevorzugt zwischen 50 und 500 $\mu$m.

Die Polymerisation der Phosphonsäuregruppen umfassenden Monomere in Schritt C) bzw. Schritt II) erfolgt vorzugsweise radikalisch. Die Radikalbildung kann thermisch, photochemisch, chemisch und/oder elektrochemisch erfolgen.

Beispielsweise kann eine Starterlösung, die mindestens eine zur Bildung von Radikalen befähigte Substanz enthält, nach der Erwärmung der Zusammensetzung gemäß Schritt A) der Zusammensetzung beigefügt werden. Des weiteren eine Starterlösung auf das nach Schritt B) erhaltene flächige Gebilde aufgebracht werden. Dies kann mittels

an sich bekannter Maßnahmen (z.B. Sprühen, Tauchen etc.) die aus dem Stand der Technik bekannt sind, erfolgen. Bei Herstellung der Membran durch Quellen kann der Flüssigkeit eine Starterlösung beigefügt werden. Diese kann auch nach dem Quellen auf das flächige Gebild aufgebracht werden.

Geeignete Radikalbildner sind unter anderem Azoverbindungen, Peroxyverbindungen, Persulfatverbindungen oder Azoamidine. Nicht limitierende Beispiele sind Dibenzoylperoxid, Dicumolperoxid, Cumolhydroperoxid, Düsopropylperoxidicarbonat, Bis(4-t-butylcyclohexyl)peroxidicarbonat, Dikaliumpersulfat, Ammoniumperoxidisulfat, 2,2'-Azobis (2-methylpropionitril) (AIBN), 2,2'-Azobis-(isobuttersäureamidin)hydrochlorid, Benzpinakol, Dibenzylderivate, Methylethylenketonperoxid, 1,1-Azobiscyclohexancarbonitril, Methylethylketonperoxid, Acetylacetonperoxid, Dilaurylperoxid, Didecanoylperoxid, tert.-Butylper-2-ethylhexanoat, Ketonperoxid, Methylisobutylketonperoxid, Cyclohexanonperoxid, Dibenzoylperoxid, tert.-Butylperoxybenzoat, tert.-Butylperoxyisopropylcarbonat, 2,5-Bis(2-ethylhexanoyl-peroxy)-2,5-dimethylhexan, tert.-Butylperoxy-2-ethylhexanoat, tert.-Butylperoxy-3,5,5-trimethylhexanoat, tert.-Butylperoxyisobutyrat, tert.-Butylperoxyacetat, Dicumylperoxid, 1,1-Bis(tert.-butylperöxy)cyclohexan, 1,1-Bis(tert.-butylperoxy)3,3,5-trimethylcyclohexan, Cumylhydroperoxid, tert.-Butylhydroperoxid, Bis(4-tert.-butylcyclohexyl)peroxydicarbonat, sowie die von der Firma DuPont unter dem Namen ®Vazo, beispielsweise ®Vazo V50 und ®Vazo WS erhältlichen Radikalbildner.

Des weiteren können auch Radikalbildner eingesetzt werden, die bei Bestrahlung Radikale bilden. Zu den bevorzugten Verbindungen gehören unter anderem α,α-Diethoxyacetophenon (DEAP, Upjon Corp), n-Butylbenzoinether (®Trigonal-14, AKZO) und 2,2-Dimethoxy-2-phenylacetophenon (®Igacure 651) und 1-Benzoyicyclohexanol (®Igacure 184), Bis(2,4,6-trimethylbenzoyl)-phenylphosphinoxid (®Irgacure 819) und 1-[4-(2-Hydroxyethoxy)phenyl]-2-hydroxy-2-phenylpropan-1-on (®Irgacure 2959), die jeweils von der Fa. Ciba Geigy Corp. kommerziell erhältlich sind.

Üblicherweise werden zwischen 0,0001 und 5 Gew.-%, insbesondere 0,01 bis 3 Gew.-% (bezogen auf das Gewicht der Phosphonsäuregruppen umfassenden Monomere) an Radikalbildner zugesetzt. Die Menge an Radikalbildner kann je nach gewünschten Polymerisationsgrad variiert werden.

Die Polymerisation kann auch durch Einwirken von IR bzw. NIR (IR = InfraRot, d. h. Licht mit einer Wellenlänge von mehr als 700 nm; NIR = Nahes IR, d. h. Licht mit einer Wellenlänge im Bereich von ca. 700 bis 2000 nm bzw. einer Energie im Bereich von ca. 0.6 bis 1.75 eV) erfolgen.

Die Polymerisation kann auch durch Einwirken von UV-Licht mit einer Wellenlänge von weniger als 400 nm erfolgen. Diese Polymerisationsmethode ist an sich bekannt und beispielsweise in Hans Joerg Elias, Makromolekulare Chemie, 5.Auflage, Band 1, s.492-511; D. R. Arnold, N. C. Baird, J. R. Bolton, J. C. D. Brand, P. W. M Jacobs, P.de Mayo, W. R. Ware, Photochemistry-An Introduction, Academic Press , New York und M.K.Mishra, Radical Photopolymerization of Vinyl Monomers, J. Macromol. Sci.-Revs. Macromol. Chem. Phys. C22(1982-1983) 409 beschrieben.

Die Polymerisation kann auch durch Einwirken von β-,y- und/oder Elektronen Strahlen erzielt werden. Gemäß einer besonderen Ausführungsform der vorliegenden Erfindung wird eine Membran mit einer Strahlungsdosis im Bereich von 1 bis 300 kGy, bevorzugt von 3 bis 250 kGy und ganz besonders bevorzugt von 20 bis 200 kGy bestrahlt.

Die Polymerisation der Phosphonsäuregruppen umfassenden Monomere in Schritt C) bzw. Schritt II) erfolgt vorzugsweise bei Temperaturen oberhalb Raumtemperatur (20°C) und kleiner 200°C, insbesondere bei Temperaturen zwischen 40°C und 150°C, besonders bevorzugt zwischen 50°C und 120°C. Die Polymerisation erfolgt vorzugsweise unter Normaldruck, kann aber auch unter Einwirkung von Druck erfolgen. Die Polymerisation führt zu einer Verfestigung des flächigen Gebildes, wobei diese Verfestigung durch Mikrohärtemessung verfolgt werden kann. Vorzugsweise beträgt die durch die Polymerisation bedingte Zunahme der Härte mindestens 20%, bezogen auf die Härte des in Schritt B) erhaltenen flächigen Gebildes.

Gemäß einer besonderen Ausführungsform der vorliegenden Erfindung weisen die Membranen eine hohe mechanische Stabilität auf. Diese Größe ergibt sich aus der Härte der Membran, die mittels Mikrohärtemessung gemäss DIN 50539 bestimmt wird. Dazu wird die Membran mit einem Vickersdiamant innerhalb von 20 s sukzessive bis zu einer Kraft von 3 mN belastet und die Eindringtiefe bestimmt. Demnach beträgt die Härte bei Raumtemperatur mindestens 0,01 $N/mm^2$, bevorzugt mindestens 0,1 N $/mm^2$ und ganz besonders bevorzugt mindestens 1 N $/mm^2$, ohne dass hierdurch eine Beschränkung erfolgen soll. In der Folge wird die Kraft während 5 s konstant bei 3 mN gehalten und das Kriechen aus der Eindringtiefe berechnet. Bei bevorzugten Membranen beträgt das Kriechen $C_{HU}$ 0,003/20/5 unter diesen Bedingungen weniger als 20%, bevorzugt weniger als 10% und ganz besonders bevorzugt weniger als 5%. Der mittels Mikrohärtemessung bestimmte Modul beträgt YHU mindestens 0,5 MPa, insbesondere mindestens 5 MPa und ganz besonders bevorzugt mindestens 10 MPa, ohne dass hierdurch eine Beschränkung erfolgen soll.

Die Härte der Membran bezieht sich sowohl auf eine Oberfläche, die keine Katalysatorschicht aufweist, als auch auf eine Seite, die eine Katalysatorschicht aufweist.

Je nach gewünschten Polymerisationsgrad ist das flächige Gebilde, welches nach der Polymerisation erhalten wird, eine selbsttragende Membran. Bevorzugt beträgt der Polymerisationsgrad mindestens 2, insbesondere mindestens 5, besonders bevorzugt mindestens 30 Wiederholeinheiten, insbesondere mindestens 50 Wiederholeinheiten, ganz besonders bevorzugt mindestens 100 Wiederholeinheiten. Dieser Polymerisationsgrad bestimmt sich über das Zahlenmittel des Molekulargewichts $M_n$, das durch GPC-Methoden ermittelt werden kann. Aufgrund der Probleme die in der Membran enthaltenen Phosphonsäuregruppen umfassenden Polymere ohne Abbau zu isolieren, wird dieser Wert anhand einer Probe bestimmt, die durch Polymerisation von Phosphonsäuregruppen umfassenden Monomeren ohne Zusatz von Polymer durchgeführt wird. Hierbei wird der Gewichtsanteil an Phosphonsäuregruppen umfassenden Monomere und an Radikalstarter im Vergleich zu den Verhältnissen der Herstellung der Membran konstant gehalten. Der Umsatz, der bei einer Vergleichspolymerisation erzielt wird, ist vorzugsweise größer oder gleich 20%, insbesondere größer oder gleich 40% und besonders bevorzugt größer oder gleich 75%, bezogen auf die eingesetzten Phosphonsäuregruppen umfassenden Monomere.

Die in der Membran enthaltenen Phosphonsäuregruppen umfassenden Polymere weisen vorzugsweise eine breite Molekulargewichtsverteilung auf. So können die Phosphonsäuregruppen umfassenden Polymere eine Polydispersität $M_w/M_n$ im Bereich von 1 bis 20, besonders bevorzugt von 3 bis 10 aufweisen.

Der Wassergehalt der protonenleitenden Membran beträgt vorzugsweise höchstens 15 Gew.-%, besonders bevorzugt höchstens 10 Gew.-% und ganz besonders bevorzugt höchstens 5 Gew.-%.

In diesem Zusammenhang kann angenommen werden, dass die Leitfähigkeit der Membran auf dem Grotthus-Mechanismus beruhen kann, wodurch das System keine zusätzliche Befeuchtung benötigt. Dementsprechend umfassen bevorzugte Membranen Anteile an niedermolekularen Phosphonsäuregruppen umfassenden Polymere. So kann der Anteil an Phosphonsäuregruppen umfassenden Polymeren mit einem Polymerisationsgrad im Bereich von 2 bis 20 bevorzugt mindestens 10 Gew.-%, besonders bevorzugt mindestens 20 Gew.-% betragen, bezogen auf das Gewicht der Phosphonsäuregruppen umfassenden Polymere.

Die Polymerisation in Schritt C) bzw. Schritt II) kann zu einer Abnahme der Schichtdicke führen. Vorzugsweise beträgt die Dicke der selbsttragenden Membran zwischen 15 und 1000 $\mu$m, vorzugsweise zwischen 20 und 500 $\mu$m, insbesondere zwischen 30 und 250 $\mu$m.

Vorzugsweise ist die gemäß Schritt C) bzw. Schritt II) erhaltene Membran selbsttragend, d.h. sie kann vom Träger ohne Beschädigung gelöst und anschließend gegebenenfalls direkt weiterverarbeitet werden.

Im Anschluss an die Polymerisation gemäß Schritt C) bzw. Schritt II) kann die Membran thermisch, photochemisch, chemisch und/oder elektrochemisch an der Oberfläche vernetzt werden. Diese Härtung der Membranoberfläche verbessert die Eigenschaften der Membran zusätzlich.

Gemäß einem besonderen Aspekt kann die Membran auf eine Temperatur von mindestens 150°C, vorzugsweise mindestens 200°C und besonders bevorzugt mindestens 250°C erwärmt werden. Vorzugsweise erfolgt die thermische Vernetzung in Gegenwart von Sauerstoff. Die Sauerstoffkonzentration liegt bei diesem Verfahrensschritt üblich im Bereich von 5 bis 50 Vol.-%, vorzugsweise 10 bis 40 Vol.-%, ohne dass hierdurch eine Beschränkung erfolgen soll.

Die Vernetzung kann auch durch Einwirken von IR bzw. NIR (IR = InfraRot, d. h. Licht mit einer Wellenlänge von mehr als 700 nm; NIR = Nahes IR, d. h. Licht mit einer Wellenlänge im Bereich von ca. 700 bis 2000 nm bzw. einer Energie im Bereich von ca. 0.6 bis 1.75 eV) und/oder UV-Licht erfolgen. Eine weitere Methode ist die Bestrahlung mit $\beta$-,$\gamma$- und/oder Elektronen Strahlen. Die Strahlungsdosis beträgt hierbei vorzugsweise zwischen 5 und 250 kGy, insbesondere 10 bis 200 kGy. Die Bestrahlung kann an Luft oder unter Inertgas erfolgen. Hierdurch werden die Gebrauchseigenschaften der Membran, insbesondere deren Haltbarkeit verbessert.

Je nach gewünschtem Vernetzungsgrad kann die Dauer der Vernetzungsreaktion in einem weiten Bereich liegen. Im allgemeinen liegt diese Reaktionszeit im Bereich von 1 Sekunde bis 10 Stunden, vorzugsweise 1 Minute bis 1 Stunde, ohne dass hierdurch eine Beschränkung erfolgen soll.

Gemäß einer besonderen Ausführungsform der vorliegenden Erfindung umfasst die Membran nach Elementaranalyse mindestens 3 Gew.-%, vorzugsweise mindestens 5 Gew.-% und besonders bevorzugt mindestens 7 Gew.-% Phosphor, bezogen auf das Gesamtgewicht der Membran. Der Anteil an Phosphor kann über eine Elementaranalyse bestimmt werden. Hierzu wird die Membran bei 110°C für 3 Stunden im Vakuum (1 mbar) getrocknet.

Die Phosphonsäuregruppen umfassenden Polymere weist vorzugsweise einen Gehalt an Phosphonsäuregruppen von mindestens 5 meq/g, besonders bevorzugt mindestens 10 meq/g auf. Dieser Wert wird über die sog. Ionenaustauschkapazität (IEC) bestimmt.

Zur Messung der IEC werden die Phosphonsäuregruppen in die freie Säure überführt, wobei die Messung vor Polymerisation der Phosphonsäuregruppen umfassenden Monomere erfolgt. Die Probe wird anschließend mit 0,1 M NaOH titriert. Aus dem Verbrauch der Säure bis zum Equivalentpunkt und dem Trockengewicht wird dann die Ionenaustauschkapazität (IEC) berechnet.

Die erfindungsgemäße Polymermembran weist verbesserte Materialeigenschaften gegenüber den bisher bekannten dotierten Polymermembranen auf. Insbesondere zeigen sie im Vergleich mit bekannten dotierten Polymermembranen bessere Leistungen. Diese begründet sich insbesondere durch eine verbesserte Protonenleitfähigkeit. Diese beträgt bei Temperaturen von 120°C mindestens 1 mS/cm, vorzugsweise mindestens 2 mS/cm, insbesondere mindestens 5 mS/cm.

Desweiteren zeigen die Membranen auch bei einer Temperatur von 70°C eine hohe Leitfähigkeit. Die Leitfähigkeit ist unter anderem abhängig vom Sulfonsäuregruppengehalt der Membran. Je höher dieser Anteil, desto besser die Leitfähigkeit bei tiefen Temperaturen. Hierbei kann eine erfindungsgemäße Membran bei geringen Temperaturen befeuchtet werden. Hierzu kann beispielsweise die als Energiequelle eingesetzte Verbindung, beispielsweise Wasserstoff, mit einem Anteil an Wasser versehen werden. In vielen Fällen genügt jedoch auch das durch die Reaktion gebildete Wasser, um eine Befeuchtung zu erzielen.

Die spezifische Leitfähigkeit wird mittels Impedanzspektroskopie in einer 4-Pol-Anordnung im potentiostatischen Modus und unter Verwendung von Platinelektroden (Draht, 0,25 mm Durchmesser) gemessen. Der Abstand zwischen den stromabnehmenden Elektroden beträgt 2 cm. Das erhaltene Spektrum wird mit einem einfachen Modell bestehend aus einer parallelen Anordnung eines ohm'schen Widerstandes und einer Kapazität ausgewertet. Der Probenquerschnitt der phosphorsäuredotierten Membran wird unmittelbar vor der Probenmontage gemessen. Zur Messung der Temperaturabhängigkeit wird die Messzelle in einem Ofen auf die gewünschte Temperatur gebracht und über eine in unmittelbarer Probennähe positioniertes Pt-100 Thermoelement geregelt. Nach Erreichen der Temperatur wird die Probe vor dem Start der Messung 10 Minuten auf dieser Temperatur gehalten.

Gasdiffusionsschicht

Die erfindungsgemäße Membran-Elektroden-Einheit weist zwei Gasdiffusionsschichten auf, die durch die Polymer-Elektrolytmembran getrennt sind. Üblich werden hierfür flächige, elektrisch leitende und säureresistente Gebilde eingesetzt. Zu diesen gehören beispielsweise Graphitfaser-Papiere, Kohlefaser-Papiere, Graphitgewebe und/oder Papiere, die durch Zugabe von Ruß leitfähig gemacht wurden. Durch diese Schichten wird eine feine Verteilung der Gas- und/oder Flüssigkeitsströme erzielt.

Diese Schicht weist im Allgemeinen eine Dicke im Bereich von 80µm bis 2000µm, insbesondere 100µm bis 1000µm und besonders bevorzugt 150µm bis 500µm auf.

Gemäß einer besonderen Ausführungsform kann mindestens eine der Gasdiffusionsschichten aus einem kompressiblen Material bestehen. Im Rahmen der vorliegenden Erfindung ist ein kompressibles Material durch die Eigenschaft gekennzeichnet, daß die Gasdiffusionsschicht ohne Verlust ihrer Integrität durch Druck auf die Hälfte, insbesondere auf ein Drittel ihrer ursprünglichen Dicke gepreßt werden kann.

Diese Eigenschaft weisen im Allgemeinen Gasdiffusionsschicht aus Graphitgewebe und/oder Papier, das durch Zugabe von Ruß leitfähig gemacht wurde, auf.

Katalysatorschicht

Die Katalysatorschicht oder Katalysatorschichten enthält oder enthalten katalytisch aktive Substanzen. Zu diesen gehören unter anderem Edelmetalle der Platingruppe, d.h. Pt, Pd, Ir, Rh, Os, Ru, oder auch die Edelmetalle Au und Ag. Desweiteren können auch Legierungen aller vorgenannten Metalle eingesetzt werden. Weiterhin kann mindestens eine Katalysatorschicht Legierungen der Platingruppenelemente mit unedlen Metallen wie zum Beispiel Fe, Co, Ni, Cr, Mn, Zr, Ti, Ga, V usw. enthalten. Darüberhinaus können auch die Oxide der vorgenannten Edelmetalle und/oder Nicht-Edelmetalle eingesetzt werden.

Die katalytisch aktiven Partikel, die die zuvor genannten Substanzen umfassen, können als Metallpulver, sogenanntes schwarzes Edelmetall, insbesondere Platin und/oder Platinlegierungen, eingesetzt werden. Derartige Partikel weisen im allgemeinen eine Größe im Bereich von 5 nm bis 200 nm, vorzugsweise im Bereich von 7 nm bis 100 nm auf.

Darüber hinaus können die Metalle auch auf einem Trägermaterial eingesetzt werden. Vorzugsweise umfasst dieser Träger Kohlenstoff, der insbesondere in Form von Ruß, Graphit oder graphitisierter Ruß, eingesetzt werden kann. Weiterhin können auch elektrisch leitfähige Metalloxide, wie zum Beispiel $SnO_x$, $TiO_x$, oder Phosphate, wie z.B. $FePO_x$, $NbPO_x$, $Zr_y(PO_x)_z$ als Trägermaterial verwendet werden. Hierbei kennzeichnen die Indices x, y und z den Sauerstoff bzw. Metallgehalt der einzelnen Verbindungen, die in einem bekannten Bereich liegen können, da die Übergangsmetalle unterschiedliche Oxidationsstufen einnehmen können.

Der Gehalt dieser geträgerten Metall-Partikel, bezogen auf das Gesamtgewicht der Metall-Träger-Verbindung, liegt im allgemeinen im Bereich von 1 bis 80 Gew.-%, vorzugsweise 5 bis 60 Gew.-% und besonders bevorzugt 10 bis 50 Gew.-%, ohne dass hierdurch eine Beschränkung erfolgen soll. Die Partikelgröße des Trägers, insbesondere die Größe der Kohlenstoffpartikel, liegt vorzugsweise im Bereich von 20 bis 1000 nm, insbesondere 30 bis 100 nm. Die Größe der sich hierauf befindlichen Metallpartikel liegt vorzugsweise im Bereich von 1 bis 20 nm, insbesondere 1 bis 10 nm und besonders bevorzugt 2 bis 6 nm.

Die Größen der unterschiedlichen Partikel stellen Mittelwerte dar und können über Transmissionselektronenmikroskopie oder Pulver-Röntgendiffraktömetrie bestimmt werden.

Die zuvor dargelegten katalytisch aktiven Partikel können im allgemeinen kommerziell erhalten werden.

Des weiteren kann die katalytisch aktive Schicht übliche Additive enthalten. Hierzu gehören unter anderem Fluorpolymere wie z.B. Polytetrafluorethylen (PTFE), protonenleitende Ionomere und oberflächenaktive Substanzen.

Gemäß einer besonderen Ausführungsform der vorliegenden Erfindung ist das Gewichtsverhältnis von Fluorpolymer zu Katalysatormaterial, umfassend mindestens ein Edelmetall und gegebenenfalls ein oder mehrere Trägermaterialien, größer als 0,1, wobei dieses Verhältnis vorzugsweise im Bereich von 0,2 bis 0,6 liegt.

Gemäß einer besonderen Ausführungsform der vorliegenden Erfindung weist die Katalysatorschicht eine Dicke im Bereich von 1 bis 1000 μm, insbesondere von 5 bis 500, vorzugsweise von 10 bis 300 μm auf. Dieser Wert stellt einen Mittelwert dar, der durch Messung der Schichtdicke im Querschnitt von Aufnahmen bestimmt werden kann, die mit einem Rasterelektronenmikroskop (REM) erhalten werden können.

Nach einer besonderen Ausführungsform der vorliegenden Erfindung beträgt der Edelmetallgehalt der Katalysatorschicht 0,1 bis 10,0 mg/cm$^2$, vorzugsweise 0,3 bis 6,0 mg/cm$^2$ und besonders bevorzugt 0,3 bis 3,0 mg/cm$^2$. Diese Werte können durch Elementaranalyse einer flächigen Probe bestimmt werden.

Für weitere Informationen über Membran-Elektroden-Einheiten wird auf die Fachliteratur, insbesondere auf die Patentanmeldungen WO 01/18894 A2, DE 195 09 748, DE 195 09 749, WO 00/26982, WO 92/15121 und DE 197 57 492 verwiesen. Die in den vorstehend genannten Literaturstellen enthaltene Offenbarung hinsichtlich des Aufbaues und der Herstellung von Membran-Elektroden-Einheiten, sowie der zu wählenden Elektroden , Gasdiffusionslagen und Katalysatoren ist auch Bestandteil der Beschreibung.

Die elektrochemisch aktive Fläche der Katalysatorschicht bezeichnet die Fläche, die mit der Polymer-Elektrolyt-Membran in Kontakt steht und an der die zuvor dargelegten Redoxreaktionen stattfinden können. Die vorliegende Erfindung ermöglicht die Bildung von besonders großen elektrochemisch aktiven Flächen. Gemäß einem besonderen Aspekt der vorliegenden Erfindung beträgt die Größe dieser elektrochemisch aktiven Fläche mindestens 2 cm$^2$, insbesondere mindestens 5 cm$^2$ und bevorzugt mindestens 10 cm$^2$, ohne daß hierdurch eine Beschränkung erfolgen soll. Der Begriff Elektrode bedeutet, daß das Material eine Elektronenleitfähigkeit aufweist, wobei die Elektrode den elektrochemisch aktiven Bereich bezeichnet.

Die Polymer-Elektrolyt-Membran weist einen inneren Bereich, der in Kontakt mit einer Katalysatorschicht steht, und einen äußeren Bereich, der nicht auf der Oberfläche einer Gasdiffusionsschicht vorgesehen ist, aufweist. Vorgesehen bedeutet in diesem Zusammenhang, dass der innere Bereich keinen überlappenden Bereich mit einer Gasdiffusionsschicht aufweist, falls eine Betrachtung senkrecht zur Oberfläche einer Gasdiffusionsschicht bzw. des äußeren Bereichs der Polymer-Elektrolyt-Membran vorgenommen wird, sodass erst nach dem Kontaktieren der Polymer-Elektrolyt-Membran mit der Gasdiffusionsschicht eine Zuordnung getroffen werden kann.

Der äußere Bereich der Polymer-Elektrolyt-Membran kann einen einschichtigen Aufbau aufweisen. In diesem Fall besteht der äußere Bereich der Polymer-Elektrolyt-Membran im Allgemeinen aus dem gleichen Material wie der innere Bereich der Polymer-Elektrolyt-Membran.

Des Weiteren kann der äußere Bereich der Polymer-Elektrolyt-Membran insbesondere mindestens eine weitere Schicht, vorzugsweise mindestens zwei weitere Schichten aufweisen. In diesem Fall weist der äußere Bereich der Polymer-Elektrolyt-Membran mindestens zwei bzw. mindestens drei Komponenten auf.

Die Dicke aller Komponenten des äußeren Bereichs der Polymer-Elektrolyt-Membran ist größer als die Dicke des inneren Bereichs der Polymer-Elektrolyt-Membran. Die Dicke des äußeren Bereichs bezieht sich auf die Summe der Dicken aller Komponenten des äußeren Bereichs. Die Komponenten des äußeren Bereichs ergeben sich aus dem Vektor parallel zur Fläche des äußeren Bereichs der Polymer-Elektrolyt-Membran, wobei die Schichten, die dieser Vektor schneidet zu den Komponenten des äußeren Bereichs zu zählen sind.

Vorzugsweise weist der äußere Bereich eine Dicke im Bereich von 80pm bis 4000μm, insbesondere im Bereich von 120μm bis 2000μm und besonders bevorzugt im Bereich von 150μm bis 800μm auf.

Die Dicke aller Komponenten des äußeren Bereichs beträgt 50% bis 100 %, vorzugsweise 65% bis 95% und besonders bevorzugt 75% bis 85% bezogen auf die Summe der Dicke aller Komponenten des inneren Bereichs. Die Dicke der Komponenten des äußeren Bereichs bezieht sich hierbei auf die Dicke, die diese Komponenten nach einem ersten Verpressen aufweisen, welches bei einem Druck von 5 N/mm$^2$ , bevorzugt 10 N/mm$^2$ über eine Zeit von 1 Minute erfolgt. Die Dicke der Komponenten des inneren Bereichs beziehen sich auf die Dicken der eingesetzten Schichten, ohne dass hierbei ein Verpressen erfolgen muss.

Die Dicke aller Komponenten des inneren Bereichs ergibt sich im Allgemeinen aus der Summe der Dicken der Membran, der Katalysatorschichten und der Gasdiffusionsschichten von Anode und Kathode.

Die Dicke der Schichten wird mit einem digitalen Dickenmessgerät der Fa. Mitutoyo bestimmt. Der Anpressdruck der zwei kreisförmigen ebenen Kontaktflächen während der Messung beträgt 1 PSI, der Durchmesser der Kontaktfläche beträgt 1cm.

Die Katalysatorschicht ist im Allgemeinen nicht selbsttragend sondern wird üblich auf die Gasdiffusionsschicht und/oder die Membran aufgebracht. Hierbei kann ein Teil der Katalysatorschicht beispielsweise in die Gasdiffusionsschicht und/oder die Membran diffundieren, wodurch sich Übergangsschichten bilden. Dies kann auch dazuführen, dass die Katalysatorschicht als Teil der Gasdiffusionsschicht aufgefasst werden kann. Die Dicke der Katalysatorschicht ergibt sich aus der Messung der Dicke der Schicht, auf die die Katalysatorschicht aufgebracht wurde, beispielsweise die Gasdiffusionsschicht oder die Membran, wobei diese Messung die Summe der Katalysatorschicht und der entsprechenden Schicht ergibt, beispielsweise die Summe aus Gasdiffusionsschicht und Katalysatorschicht.

Die Dicke der Komponenten des äußeren Bereichs nimmt bei einer Temperatur von 80°C und einem Druck von 5 N/mm$^2$ über einen Zeitraum von 5 Stunden höchstens um 5% ab, wobei diese Abnahme der Dicke nach einem

ersten Verpressen bestimmt wird, welches bei einem Druck von 5 $N/mm^2$, bevorzugt 10 $N/mm^2$ über eine Zeit von 1 Minute erfolgt.

Die Messung der druck- und temperaturabhängigen Verformung parallel zum Flächenvektor der Komponenten des äußeren Bereichs, insbesondere des äußeren Bereichs der Polymer-Elektrolyt-Membran erfolgt durch eine Hydraulikpresse mit beheizbaren Pressplatten.

Die Hydraulikpresse weist hierbei die folgenden technischen Daten auf:

Die Presse hat einen Kraftbereich von 50-50000 N bei einer maximalen Pressfläche von 220 x 220 $mm^2$. Die Auflösung des Drucksensors beträgt $\pm 1$ N.

An den Pressplatten ist ein induktiver Wegsensor mit einem Messbereich von 10 mm angebracht. Die Auflösung des Wegsensors beträgt $\pm 1$ μm.

Die Pressplatten können in einem Temperaturbereich von RT - 200°C betrieben werden.

Die Presse wird mittels eines PCs mit entsprechender Software im kraft-geregelten Modus betrieben.

Die Daten des Kraft- und des Wegsensors werden in Echtzeit mit einer Datenrate von bis zu 100 Messdaten/Sekunde aufgezeichnet und dargestellt.

Versuchsdurchführung:

Das zu prüfende Material wird auf eine Fläche von 55 x 55 $mm^2$ geschnitten und zwischen die auf 80°, 120°C bzw. 160°C vorgeheizten Pressplatten gelegt.

Die Pressplatten werden geschlossen und eine Anfangskraft von 120N aufgebracht, so dass der Regelkreis der Presse geschlossen wird. Der Wegsensor wird an dieser Stelle auf 0 gesetzt. Anschließend wird eine vorher programmierte Druckrampe abgefahren. Der Druck wird dazu mit einer Geschwindigkeit von 2 $N/mm^2s$ auf einen vorgegebenen Wert, beispielsweise 5, 10, 15 oder 20 $N/mm^2$ erhöht und bei diesem Wert für mindestens 5 Stunden gehalten. Nach Erreichen der Gesamt-Haltezeit wird der Druck mit einer Rampe von 2 $N/mm^2s$ auf 0 $N/mm^2$ zurückgefahren und die Presse geöffnet.

Die relative und/oder absolute Dickenänderung kann aus einer während der Druckprüfung aufgezeichneten Verformungskurve abgelesen werden oder im Anschluss an die Druckprüfung durch eine Messung mittels Standard-Dickenmessgerät gemessen werden.

Diese Eigenschaft der Komponenten des äußeren Bereichs wird im Allgemeinen durch die Verwendung von Polymeren erzielt, die eine hohe Druckstabilität aufweisen. Hierbei kann die Polymer-Elektrolyt-Membran im äußeren Bereich einen besonders hohen Vernetzungsgrad aufweisen, der durch eine spezifische Bestrahlung erzielt werden kann, die zuvor beschrieben wurde.

Vorzugsweise wird der äußere Bereich Membran mit einer Dosis von mindestens 100 kGy, vorzugsweise mindestens 132 kGy und besonders bevorzugt mindestens 200 kGy bestrahlt. Der innere Bereich der Membran wird vorzugsweise mit höchstens 130 kGy, bevorzugt höchstens 99 kGy und besonders bevorzugt höchstens 80 kGy bestrahlt. Das Verhältnis der Bestrahlungsleistung des äußeren Bereichs zur Bestrahlungsleistung des inneren Bereichs beträgt vorzugsweise mindestens 1,5, besonders bevorzugt mindestens 2 und ganz besonders bevorzugt mindestens 2,5.

Die Bestrahlung des äußeren Bereichs kann des Weiteren vorzugsweise mit einer UV-Lampe, die eine Leistung von mindestens 50W, insbesondere 100W und besonders bevorzugt 200W aufweist erfolgen. Die Dauer kann hierbei in einem weiten Bereich liegen. Vorzugsweise wird für mindestens eine Minute, insbesondere mindestens 30 Minuten und besonders bevorzugt mindestens 5 Stunden bestrahlt, wobei vielfach eine Bestrahlung von bis zu 30 Stunden, insbesondere bis zu 10 Stunden genügt. Das Verhältnis der Bestrahlungsdauer des äußeren Bereichs zur Bestrahlungsdauer des inneren Bereichs beträgt vorzugsweise mindestens 1,5, besonders bevorzugt mindestens 2 und ganz besonders bevorzugt mindestens 2,5

Falls der äußere Bereich einen mehrschichtigen Aufbau aufweist, so zeigen diese Materialien ebenfalls im Allgemeinen eine hohe Druckstabilität.

Vorzugsweise nimmt die Dicke der Komponenten des äußeren Bereichs bei einer Temperatur von 120°C, besonders bevorzugt 160°C und einem Druck von 5 $N/mm^2$, bevorzugt 10 $N/mm^2$, insbesondere 15 $N/mm^2$ und besonders bevorzugt 20 $N/mm^2$ über einen Zeitraum von 5 Stunden, besonders bevorzugt 10 Stunden höchstens um 5%, insbesondere höchstens 2%, bevorzugt höchstens um 1 % ab.

Gemäß einem bevorzugten Aspekt der vorliegenden Erfindung umfasst der äußere Bereich mindestens eine, vorzugsweise mindestens zwei Polymerschichten mit einer Dicke größer oder gleich 10 μm, wobei die Polymere dieser Schichten jeweils ein E-Modul von mindestens 6 $N/mm^2$ , vorzugsweise mindestens 7 $N/mm^2$ aufweisen, gemessen bei 80°C, vorzugsweise bei 160°C und einer Dehnung von 100%. Die Messung dieser Werte erfolgt gemäß DIN EN ISO 527-1.

Gemäß einem besonderen Aspekt der vorliegenden Erfindung kann eine Schicht durch thermoplastische Verfahren, beispielsweise Spritzguss oder Extrusion aufgebracht werden. Dementsprechend ist vorzugsweise eine Schicht aus einem schmelzbaren Polymer hergestellt.

Im Rahmen der vorliegenden Erfindung bevorzugt verwendete Polymere zeigen vorzugsweise eine Dauergebrauchstemperatur von mindestens 190°C, bevorzugt mindestens 220°C und besonders bevorzugt mindestens 250°C gemessen nach MIL-P-46112B, Paragraph 4.4.5.

Zu den bevorzugten schmelzbaren Polymeren gehören insbesondere Fluorpolymere, wie beispielsweise Poly (tetrafluorethylen-co-hexafluorpropylen) FEP, Polyvinylidenfluorid PVDF, Perfluoralkoxypolymer PFA, Poly(tetrafluorethylen-co-pen'luoro(methylvinylether)) MFA. Diese Polymere sind vielfach kommerziell beispielsweise unter den Handelsbezeichnungen Hostafon®, Hyflon®, Teflon®, Dyneon® und Nowoflon® erhältlich.

Eine oder beide Schichten können unter anderem aus Polyphenylene, Phenolharze, Phenoxy-Harze, Polysulfidether, Polyphenylensulfid, Polyethersulfone, Polyimine, Polyetherimine, Polyazole, Polybenzimidazole, Polybenzoxazole, Polybenzthiazole, Polybenzoxadiazole, Polybenztriazole, Polyphosphazene, Polyetherketone, Polyketone, Polyetheretherketone, Polyetherketonketone, Polyphenylenamide, Polyphenyleneoxide, Polyimiden und Mischungen von zwei oder mehr dieser Polymere hergestellt werden.

Zu den Polyimiden gehören auch Polymere, die neben Imid- auch Amid-(Polyamidimide), Ester- (Polyesterimide) u. Ether-Gruppen (Polyetherimide) als Bestandteile der Hauptkette enthalten.

Die verschiedenen Schichten können unter Verwendung von geeigneten Polymeren miteinander verbunden werden. Zu diesen gehören insbesondere Fluorpolymere. Geeignete Fluorpolymere sind in der Fachwelt bekannt. Hierzu gehören unter anderem Polyfluortetraethylen (PTFE) und Poly(tetrafluorethylen-co-hexafluorpropylen) (FEP). Die sich auf den zuvor beschriebenen Schichten befindliche Schicht aus aus Fluorpolymeren weist im Allgemeinen eine Dicke von mindestens 0,5 $\mu$m, insbesondere von mindestens 2,5 $\mu$m auf. Diese Schicht kann zwischen der Polymer-Elektrolyt-Membran und weiteren Schichten vorgesehen sein. Des weiteren kann die Schicht auch auf der von der Polymer-Elektrolyt-Membran abgewandten Seite aufgebracht sein. Darüber hinaus können beide Oberflächen der zu laminierenden Schichten mit einer Schicht aus Fluorpolymeren versehen sein. Hierdurch kann überraschend die Langzeitstabilität der MEEs verbessert werden.

Mindestens eine Komponente des äußeren Bereichs der Polymer-Elektrolyt-Membran steht üblich mit elektrisch leitenden Separatorplatten in Kontakt, die typisch mit Strömungsfeldrinnen auf den den Gasdiffusionsschichten zugewandten Seiten versehen sind, um die Verteilung von Reaktantenfluiden zu ermöglichen. Die Separatorplatten werden üblich aus Graphit oder aus leitfähigem, wärmebeständigem Kunststoff gefertigt.

Im Zusammenspiel mit den Separatorplatten dichten die Komponenten des äußeren Bereichs die Gasräume im Allgemeinen nach außen ab. Darüber hinaus dichten die Komponenten des äußeren Bereichs im Zusammenspiel mit dem inneren Bereich der Polymer-Elektrolyt-Membran im Allgemeinen auch die Gasräume zwischen Anode und Kathode ab. Überraschend wurde somit gefunden, dass ein verbessertes Dichtungskonzept zu einer Brennstoffzelle mit einer verlängerten Lebensdauer führen kann.

Die folgenden Figuren beschreiben verschiedene Ausführungsformen der vorliegenden Erfindung, wobei diese Figuren das Verständnis der vorliegenden Erfindung vertiefen sollen, ohne dass hierdurch eine Beschränkung erfolgen soll.

Es zeigen

Figur 1 einen schematischen Querschnitt einer erfindungsgemäßen Membran-Elektroden-Einheit, wobei die Katalysatorschicht auf die Gasdiffusionsschicht aufgebracht wurde,

Figur 2 einen schematischen Querschnitt einer zweiten erfindungsgemäßen Membran-Elektroden-Einheit, wobei die Katalysatorschicht auf die Gasdiffusionsschicht aufgebracht wurde.

Figur 1 zeigt eine Seitenansicht einer Membran-Elektroden-Einheit gemäß der Erfindung in geschnittener Darstellung. Es handelt sich um ein Schema, wobei die Darstellung den Zustand vor dem Verpressen beschreibt und die Abstände zwischen den Schichten das Verständnis verbessern sollen. Hierbei weist die Polymer-Elektrolyt-Membran 1 eine Schicht auf, die im wesentlichen eine konstante Dicke aufweist. Der äußere Bereich wird durch zwei Schichten 2 und 3 gebildet, so dass der äußere Bereich eine größere Dicke aufweist als der innere Bereich der Polymer-Elektrolyt-Membran. Der innere Bereich des Polymer-Elektrolyt-Membran steht in Kontakt mit den Katalysatorschichten 4 und 4a. Auf beiden Seiten der Oberfläche des inneren Bereichs der Polymer-Elektrolyt-Membran 1 ist jeweils eine Gasdiffusionsschicht 5, 6 vorgesehen, die eine Katalysatorschicht 4 bzw. 4a aufweist. Hierbei bildet eine mit einer Katalysatorschicht 4 versehene Gasdiffusionsschicht 5 die Anode bzw. Kathode, wohingegen die zweite mit einer Katalysatorschicht 4a versehene Gasdiffusionsschicht 6 die Kathode bzw. Anode bildet. Die Dicke der Summe der Schichten 1+2+3 liegt im Bereich von 50 bis 100%, vorzugsweise 65 bis 95% und besonders bevorzugt 75 bis 85% der Dicke der Schichten 1 +4+4a+5+6.

Figur 2 zeigt eine Seitenansicht einer Membran-Elektroden-Einheit gemäß der Erfindung in geschnittener Darstellung. Es handelt sich um ein Schema, wobei die Darstellung den Zustand vor dem Verpressen beschreibt und die Abstände zwischen den Schichten das Verständnis verbessern sollen. Hierbei weist die Polymer-Elektrolyt-Membran 1 einen inneren Bereich 1a und einen äußeren Bereich 1 b auf. Der innere Bereich des Polymer-Elektrolyt-Membran

steht in Kontakt mit den Katalysatorschichten 4 und 4a. Auf beiden Seiten der Oberfläche des inneren Bereichs der Polymer-Elektrolyt-Membran 1 ist jeweils eine Gasdiffusionsschicht 5, 6 vorgesehen, die eine Katalysatorschicht 4 bzw. 4a aufweist. Hierbei bildet eine mit einer Katalysatorschicht 4 versehene Gasdiffusionsschicht 5 die Anode bzw. Kathode, wohingegen die zweite mit einer Katalysatorschicht 4a versehene Gasdiffusionsschicht 6 die Kathode bzw. Anode bildet. Die Dicke des äußeren Bereichs 1 b liegt im Bereich von 50 bis 100%, vorzugsweise 65 bis 95% und besonders bevorzugt 75 bis 85% der Dicke der Schichten 1 a+4+4a+5+6

Die Herstellung von erfindungsgemäßen Membran-Elektroden-Einheit ist dem Fachmann offensichtlich. Im Allgemeinen werden die verschiedenen Bestandteile der Membran-Elektroden-Einheit übereinandergelegt und durch Druck und Temperatur miteinander verbunden. Im Allgemeinen wird bei einer Temperatur im Bereich von 10 bis 300°C, insbesondere 20°C bis 200° und mit einem Druck im Bereich von 1 bis 1000 bar, insbesondere von 3 bis 300 bar laminiert.

Anschließend kann der äußere Bereich der Polymer-Elektrolyt-Membran durch eine zweite Polymerschicht verdickt werden. Diese zweite Schicht kann beispielsweise auflaminiert werden. Des Weiteren kann die zweite Schicht auch durch thermoplastische Verfahren, beispielsweise Extrusion oder Spritzguss aufgebracht werden.

Die fertige Membran-Elektroden-Einheit (MEE) ist nach dem Abkühlen betriebsbereit und kann in einer Brennstoffzelle verwendet werden.

Besonders überraschend wurde festgestellt, daß erfindungsgemäße Membran-Elektroden-Einheiten aufgrund ihrer Dimensionstabilität bei schwankenden Umgebungstemperaturen und Luftfeuchtigkeit problemlos gelagert oder versendet werden können. Auch nach längerer Lagerung oder nach Versand an Orte mit deutlich unterschiedlichen klimatischen Bedingungen stimmen die Dimensionen der MEE problemlos für den Einbau in Brennstoffzellenstacks. Die MEE muß für einen externen Einbau dann vor Ort nicht mehr konditioniert werden, was die Herstellung der Brennstoffzelle vereinfacht und Zeit und Kosten spart.

Ein Vorteil bevorzugter MEEs ist, daß sie den Betrieb der Brennstoffzelle bei Temperaturen oberhalb 120 °C ermöglichen. Dies gilt für gasförmige und flüssige Brennstoffe, wie z.B. Wasserstoff enthaltende Gase, die z.B. in einem vorgeschalteten Reformierungsschritt aus Kohlenwasserstoffen hergestellt werden. Als Oxidanz kann dabei z.B. Sauerstoff oder Luft verwendet werden.

Ein weiterer Vorteil bevorzugter MEEs ist, daß sie beim Betrieb oberhalb 120 °C auch mit reinen Platinkatalysatoren, d.h. ohne einen weiteren Legierungsbestandteil, eine hohe Toleranz gegen Kohlenmonoxid aufweisen. Bei Temperaturen von 160 °C kann z.B. mehr als 1 % CO im Brenngas enthalten sein, ohne daß dies zu einer merklichen Reduktion der Leistung der Brennstoffzelle führt.

Bevorzugte MEEs können in Brennstoffzellen betrieben werden, ohne daß die Brenngase und die Oxidanzen trotz der möglichen hohen Betriebstemperaturen nicht befeuchtet werden müssen. Die Brennstoffzelle arbeitet dennoch stabil und die Membran verliert ihre Leitfähigkeit nicht. Dies vereinfacht das gesamte Brennstoffzellensystem und bringt zusätzliche Kostenersparnisse, da die Führung des Wasserkreislaufs vereinfacht wird. Weiter wird hierdurch auch das Verhalten bei Temperaturen unterhalb 0 °C des Brennstoffzellensystems verbessert.

Bevorzugte MEEs erlauben überraschend, daß die Brennstoffzelle problemlos auf Raumtemperatur und darunter abgekühlt werden kann und danach wieder in Betrieb genommen werden kann, ohne an Leistung zu verlieren.

Des weiteren zeigen die bevorzugten MEEs der vorliegenden Erfindung eine sehr hohe Langzeitstabilität. Es wurde festgestellt, daß eine erfindungsgemäße Brennstoffzelle über lange Zeiten z.B. mehr als 5000 Stunden bei Temperaturen von mehr als 120 °C mit trockenen Reaktionsgasen kontinuierlich betrieben werden kann, ohne daß eine merkliche Leistungsdegradation feststellbar ist. Die dabei erzielbaren Leistungsdichten sind auch nach einer derartig langen Zeit sehr hoch.

Hierbei zeigen die erfindungsgemäßen Brennstoffzellen auch nach langer Zeit, beispielsweise mehr als 5000 Stunden eine hohe Ruhespannung, die nach dieser Zeit vorzugsweise mindestens 900 mV, besonderes bevorzugt mindestens 920 mV. Zur Messung der Ruhespannung wird eine Brennstoffzelle mit einem Wasserstoff-Fluss auf der Anode und einem Luft-Fluss auf der Kathode stromlos betrieben. Die Messung erfolgt, indem die Brennstoffzelle von einem Strom von 0.2 A/cm$^2$ auf den stromlosen Zustand geschaltet wird und dann dort 2 Minuten die Ruhespannung aufgezeichnet wird. Der Wert nach nach 5 Minuten ist das entsprechende Ruhepotential. Die gemessenen Werte der Ruhespannung gelten für eine Temperatur von 160°C. Darüber hinaus zeigt die Brennstoffzelle nach dieser Zeit vorzugsweise einen geringen Gasdurchtritt (gas-cross-over). Zur Messung des Cross-overs wird die Anodenseite der Brennstoffzelle mit Wasserstoff (5 L/h) betrieben, die Kathode mit Stickstoff (5Uh). Die Anode dient als Referenz- und Gegenelektrode. Die Kathode als Arbeitselektrode. Die Kathode wird auf ein Potential von 0.5 V gesetzt und der durch die Membran diffundierende Wasserstoff an der Kathode massentransport-limitiert oxidiert. Der resultierende Strom ist ein Maß für die Wasserstoff- Permeationsrate. Der Strom ist $<3$ mA/cm$^2$, bevorzugt $<2$mA/cm$^2$, besonders bevorzugt $<1$ mA/cm$^2$ in einer 50 cm$^2$ Zelle. Die gemessenen Werte des H2-cross-overs gelten für eine Temperatur von 160°C.

Darüber hinaus können die erfindungsgemäßen MEEs kostengünstig und einfach hergestellt werden.

Für weitere Informationen über Membran-Elektroden-Einheiten wird auf die Fachliteratur, insbesondere auf die Patente US-A-4,191,618, US-A-4,212,714 und US-A-4,333,805 verwiesen.

**Patentbeispiel**

Nach DE 10331365.6 wurde ein PBI-Film mit dem Dicken von 50 μm hergestellt. Der Film wurde in H2O bei 80°C dreimal gewaschen. Anschließend wurde der Film mit der Vinylphosphonsäure/H2O Mischung (9/1) bei 50°C dotiert. Die Membran wurde dann mit der Elektronen-Bestrahlung 99 kGy bestrahlt. Die Dicke der Membran nach der Bestrahlung betrug 120 μm.

Die so erhaltene Membran wurde zur Herstellung einer Membran-Elektroden-Einheit eingesetzt. Die Fläche der Membran betrug 80mm * 80mm Die Membran wurde zwischen eine Anode (54mm*54mm) und eine Kathode (54mm*54mm) gelegt und bei 120 °C auf eine Gesamtdicke von 720 μm verpresst.

Als Anode wurde eine Katalysator beschichtete und Ionomer enthaltende Diffusionsschicht eingesetzt. Die Katalysatorbeladung betrug 1,5 $mg_{Pt/Ru}/cm^2$ Als Anode wurde eine Katalysator beschichtete und Ionomer enthaltende Diffusionsschicht eingesetzt. Die Katalysatorbeladung betrug 4 $mg_{Pt}/cm^2$

Die aktive MEA-Fläche ist 29,26 $cm^2$ und die Gesamtfläche der Membran 64 $cm^2$. Die Dicke der Membran im Innenbereich betrug im Mittel 70 μm, die im Außenbereich im Mittel 100 μm.

Es konnten folgende Leistungsdaten der MEA erzielt werden, die in Figur 3 dargestellt werden: 0.5M MeOH / air, q(MeOH) = 20 ml/min, stoich(air) = 3 (min 200 ml/min), T= 110°C

Der Methanoldurchtritt betrug 70mA/$cm^2$ und der Zellenwiderstand 200 mOhm$cm^2$

**Patentansprüche**

**1.** Membran-Elektroden-Einheit

- aufweisend zwei Gasdiffusionsschichten, die jeweils mit einer Katalysatorschicht in Kontakt stehen, die durch eine Polymer-Elektrolyt-Membran getrennt werden,
- wobei die Polymer-Elektrolyt-Membran Polyazole umfasst,
- wobei die Membran Polymere umfasst, die durch Polymerisation von Phosphonsäuregruppen umfassenden Monomeren und/oder Sulfonsäuregruppen umfassenden Monomeren erhältlich sind,
- wobei die Polymer-Elektrolyt.Membran

  ■ einen inneren Bereich, der in Kontakt mit einer Katalysatorschicht steht, und
  ■ einen äußeren Bereich, der nicht auf der Oberfläche einer Gasdiffusionsschicht vorgesehen ist,
  aufweist,
  **dadurch gekennzeichnet, dass**

- die Dicke aller Komponenten des äußeren Bereichs 50 bis 100 %, bezogen auf die Dicke aller Komponenten des inneren Bereichs, beträgt,
- wobei die Dicke des äußeren Bereichs bei einer Temperatur von 80°C und einem Druck von 5 N/$mm^2$ über einen Zeitraum' von 5 Stunden höchstens um 5% abnimmt,
- wobei diese Abnahme der Dicke nach einem ersten Verpressen bestimmt wird, welches bei einem Druck von 5 N/$mm^2$ über eine Zeit von 1 Minute erfolgt.

**2.** Membran-Elektroden-Einheit gemäß Anspruch 1, **dadurch gekennzeichnet, dass** der äußere Bereich einen einschichtigen Aufbau aufweist.

**3.** Membran-Elektroden-Einheit gemäß Anspruch 1, **dadurch gekennzeichnet, dass** der äußere Bereich der Polymer-Elektrolyt-Membran mindestens eine weitere Schicht aufweist.

**4.** Membran-Elektroden-Einheit gemäß einem oder mehreren der vorhergehenden Ansprüche, **dadurch gekennzeichnet, dass** die Dicke aller Komponenten des äußeren Bereichs 75 bis 85 %, bezogen auf die Dicke aller Komponenten des inneren Bereichs, beträgt.

**5.** Membran-Elektroden-Einheit gemäß Anspruch 3 oder 4, **dadurch gekennzeichnet, dass** der äußere Bereichs der Polymer-Elektrolyt-Membran mindestens eine Polymerschicht aufweist, die schmelzbar ist.

**6.** Membran-Elektroden-Einheit gemäß Anspruch 5, **dadurch gekennzeichnet, dass** die Polymerschicht Fluorpolymere umfasst.

7. Membran-Elektroden-Einheit gemäß Anspruch 5 oder 6, **dadurch gekennzeichnet, dass** die Polymerschicht Polyphenylene, Phenolharze, Phenoxy-Harz Polysulfidether, Polyphenylensulfide, Polyethersulfone, Polyimine, Polyetherimine, Polyazole, Polybenzimidazole, Polybenzoxazole, Polybenzthiazole, Polybenzoxadiazole, Polybenztriazole, Polyphosphazene, Polyetherketone, Polyketone, Polyetheretherketone, Polyetherketonketone, Polyphenylenamide, Polyphenyteneoxide, Polyimiden und Mischungen von zwei oder mehr dieser Polymere umfasst.

8. Membran-Elektroden-Einheit gemäß einem oder mehreren der vorhergehenden Ansprüche, **dadurch gekennzeichnet, dass** der äußere Bereich mindestens zwei Polymerschichten mit einer Dicke größer oder gleich 10 μm umfasst, wobei die Polymere dieser Schichten jeweils ein E-Modul von mindestens 6 $N/mm^2$ aufweisen, gemessen bei 160°C und einer Dehnung von 100%.

9. Membran-Elektroden-Einheit gemäß einem oder mehreren der vorhergehenden Ansprüche, **dadurch gekennzeichnet, dass** der innere Bereich der Polymer-Elektrolyt-Membran eine Dicke im Bereich von 15 bis.1000 μm aufweist.

10. Membran-Elektroden-Einheit gemäß einem oder mehreren der vorhergehenden Ansprüche, **dadurch gekennzeichnet, dass** die Dicke aller Komponenten des äußeren Bereichs im Bereich von 120 bis 2000 μm liegt.

11. Membran-Elektroden-Einheit gemäß einem oder mehreren der vorhergehenden Ansprüche, **dadurch gekennzeichnet, dass** das Verhältnis der Dicke des äußeren Bereichs der Polymer-Elektrolyt-Membran zur Dicke des inneren Bereichs der Polymer-Elektrolyt-Membran im Bereich von 1.1 bis 200:1 liegt.

12. Membran-Elektroden-Einheit gemäß einem oder mehreren der vorhergehenden Ansprüche, **dadurch gekennzeichnet, dass** die zwei Katalysatorschichten jeweils eine elektrochemisch aktive Fläche aufweisen, deren Größe mindestens 2 $cm^2$ beträgt.

13. Membran-Elektroden-Einheit gemäß einem oder mehreren der vorhergehenden Ansprüche, **dadurch gekennzeichnet, dass** mindestens eine der Elektroden aus einem kompressiblen Material ist.

14. Brennstoffzelle aufweisend mindestens eine Membran-Elektroden.Einheit gemäß einem oder mehreren der Ansprüche 1 bis 13.

15. Brennstoffzelle gemäß Anspruch 14, **dadurch gekennzeichnet, dass** mindestens eine der Komponenten des äußeren Bereichs mit elektrisch leitenden Separatorplatten in Kontakt steht.

16. Verfahren zur Herstellung der Membran-Elektroden-Einheiten gemäß einem oder mehreren der Ansprüche 1 bis 13, **dadurch gekennzeichnet, dass** man eine Membran mit zwei Gasdiffusionsschichten verbindet und anschließend auf den äußeren Bereich der Membran mindestens eine weitere Polymerschicht aufbringt.

17. Verfahren gemäß Anspruch 16, **dadurch gekennzeichnet, dass** man die Polymerschicht des äußeren Bereichs durch Laminieren aufbringt.

18. Verfahren gemäß Anspruch 17, **dadurch gekennzeichnet, dass** man die Polymerschicht des äußeren Bereichs durch Extrusion aufbringt.

## Claims

1. A membrane electrode assembly

   - having two gas diffusion layers which are each in contact with a catalyst layer, the catalyst layers being separated by a polymer electrolyte membrane,
   - wherein the polymer electrolyte membrane comprises polyazoles,
   - wherein the membrane comprises polymers which can be obtained by polymerisation of monomers comprising phosphonic acid groups and/or monomers comprising sulphonic acid groups,
   - wherein the polymer electrolyte membrane has

     • an inner area which is in contact with a catalyst layer, and

• an outer area which is not provided on the surface of a gas diffusion layer,
**characterized in that**

- the thickness of all the components of the outer area is 50 to 100%, based on the thickness of all the components of the inner area,
- wherein the thickness of the outer area decreases by no more than 5% at a temperature of 80°C and a pressure of 5 $N/mm^2$ over a period of time of 5 hours,
- wherein this decrease in thickness is determined after a first compression step which takes place at a pressure of 5 $N/mm^2$ over a period of time of 1 minute.

**2.** The membrane electrode assembly according to claim 1, **characterized in that** the outer area has a monolayer structure.

**3.** The membrane electrode assembly according to claim 1, **characterized in that** the outer area of the polymer electrolyte membrane has at least one more layer.

**4.** The membrane electrode assembly according to one or more of the preceding claims, **characterized in that** the thickness of all the components of the outer area is 75 to 85%, based on the thickness of all the components of the inner area.

**5.** The membrane electrode assembly according to claim 3 or 4, **characterized in that** the outer area of the polymer electrolyte membrane has at least one polymer layer which is meltable.

**6.** The membrane electrode assembly according to claim 5, **characterized in that** the polymer layer comprises fluoropolymers.

**7.** The membrane electrode assembly according to claim 5 or 6, **characterized in that** the polymer layer comprises polyphenylenes, phenol resins, phenoxy resins, polysulphide ethers, polyphenylenesulphides, polyethersulphones, polyimines, polyetherimines, polyazoles, polybenzimidazoles, polybenzoxazoles, polybenzothiazoles, polybenzoxadiazoles, polybenzotriazoles, polyphosphazenes, polyether ketones, polyketones, polyether ether ketones, polyether ketone ketones, polyphenylene amides, polyphenylene oxides, polyimides and mixtures of two or more of these polymers.

**8.** The membrane electrode assembly according to one or more of the preceding claims, **characterized in that** the outer area comprises at least two polymer layers having a thickness greater than or equal to 10 μm, each of the polymers of these layers having a modulus of elasticity of at least 6 $N/mm^2$, measured at 160°C and an elongation of 100%.

**9.** The membrane electrode assembly according to one or more of the preceding claims, **characterized in that** the inner area of the polymer electrolyte membrane has a thickness in the range of from 15 to 1000 μm.

**10.** The membrane electrode assembly according to one or more of the preceding claims, **characterized in that** the thickness of all the components of the outer area is in the range of from 120 to 2000 μm.

**11.** The membrane electrode assembly according to one or more of the preceding claims, **characterized in that** the ratio of the thickness of the outer area of the polymer electrolyte membrane to the thickness of the inner area of the polymer electrolyte membrane is in the range of from 1:1 to 200:1.

**12.** The membrane electrode assembly according to one or more of the preceding claims, **characterized in that** the two catalyst layers each have an electrochemically active surface, the size of which is at least 2 $cm^2$.

**13.** The membrane electrode assembly according to one or more of the preceding claims, **characterized in that** at least one of the electrodes is made of a compressible material.

**14.** A fuel cell having at least one membrane electrode assembly according to one or more of claims 1 to 13.

**15.** The fuel cell according to claim 14, **characterized in that** at least one of the components of the outer area is in contact with electrically conductive separator plates.

**16.** A method for producing the membrane electrode assemblies according to one or more of claims 1 to 13, **characterized in that** a membrane is connected with two gas diffusion layers and at least one more polymer layer is subsequently applied to the outer area of the membrane.

**17.** The method according to claim 16, **characterized in that** the polymer layer of the outer area is applied by lamination.

**18.** The method according to claim 17, **characterized in that** the polymer layer of the outer area is applied by extrusion.

## Revendications

**1.** Unité des électrodes d'une membrane

- comportant deux couches pour la diffusion de gaz respectivement en contact avec une couche des catalyseurs divisés par une membrane électrolyte polymérique,
- la membrane électrolyte polymérique comprenant de polyazoles,
- la membrane comprenant de polymères obtenus par les monomères obtenus par la polymérisation de groupes de phosphènes ou bien par les monomères obtenus par de groupes d'acide sulfoné,
- la membrane électrolyte polymérique comportant :
- un secteur interne en contact avec une couche du catalyseur, et
- un secteur externe qui n'est pas prévu sur la surface d'une couche pour la diffusion de gaz,

**caractérisée en ce que**

- l'épaisseur de tous les composants du secteur extérieur s'élève à 50
- 100% par rapport à l'épaisseur de tous les composants du secteur interne.
- l'épaisseur du secteur externe dans une durée de 5 heures diminue d'un maximum de 5% en partant d'une température de 80° C et d'une pression de 5 N/mm$^2$,
- cette diminution de l'épaisseur est déterminée après une première pression exécutée à une épaisseur de 5 N/mm$^2$ pour une durée de 1 minute.

**2.** Unité des électrodes d'une membrane selon revendication 1, **caractérisée en ce que** le secteur externe comporte une structure à une seule couche.

**3.** Unité des électrodes d'une membrane selon revendication 1, **caractérisée en ce que** le secteur externe de la membrane des électrolytes du polymère comporte au moins une couche ultérieure.

**4.** Unité des électrodes d'une membrane selon une ou plusieurs revendications précédentes, **caractérisée en ce que** l'épaisseur de tous les composants du secteur externe s'élève à 75 - 80% par rapport à l'épaisseur de tous les composants du secteur interne.

**5.** Unité des électrodes d'une membrane selon les revendications 3 ou 4, **caractérisée en ce que** le secteur externe de la membrane des électrolytes du polymère comporte au moins une couche de polymère fusible.

**6.** Unité des électrodes d'une membrane selon revendication 5, **caractérisée en ce que** la couche polymérique comporte de polymères de fluor.

**7.** Unité des électrodes d'une membrane selon revendication 5, **caractérisée en ce que** la couche polymérique comporte de polyphényles, de résines du phénol, de résines du phénol oxydés, d'éthers polysulfures, de soulfures polyphényles, de soulfures polyéthers, de polyamines, de polyéthersimines, de polyazoles, de polybenzimidazoles, de polybenzoxazoles, de polybenzthiazoles, the polybenzoxadiazoles, de polybenztriazoles, de polyphosphazenes, de cétones polyéthers, de polycétones, de cétones d'éthers polyéthers, de cétones polyéthers, d'amides polyphényles, d'oxydes polyphényles, de polyamides et de mélanges de deux ou plusieurs polymères de ce type.

**8.** Unité des électrodes d'une membrane selon une ou plusieurs revendications précédentes, **caractérisée en ce que** le secteur externe comporte au moins deux couches de polymères avec une épaisseur supérieure ou égal 10 μm, en comportant les polymères de ces couches respectivement un module E d'au moins 6 N/mm$^2$, mesurées a 160 °C et avec une tension de 100%.

**9.** Unité des électrodes d'une membrane selon une ou plusieurs revendications précédentes, **caractérisée en ce que**

le secteur interne de la membrane du polymère électrolyte comporte une épaisseur entre 15 et 1000 μm.

**10.** Unité des électrodes d'une membrane selon une ou plusieurs revendications précédentes, **caractérisée en ce que** l'épaisseur des tous les composants du secteur externe est entre 120 et 2000 μm.

**11.** Unité des électrodes d'une membrane selon une ou plusieurs revendications précédentes, **caractérisée en ce que** le rapport entre l'épaisseur du secteur externe de la membrane du polymère électrolyte et l'épaisseur du secteur interne de la membrane du polymère électrolyte est entre 1:1 et 200:1.

**12.** Unité des électrodes d'une membrane selon une ou plusieurs revendications précédentes, **caractérisée en ce que** les deux couches du catalyseur comportent respectivement une surface électrochimique active d'une dimension d'au moins 2 $cm^2$.

**13.** Unité des électrodes d'une membrane selon une ou plusieurs revendications précédentes, **caractérisée en ce qu'**au moins un des électrodes consiste de matériau compressible.

**14.** Cellule de combustible comportant au moins une unité des électrodes d'une membrane selon une ou plusieurs revendications précédentes.

**15.** Cellule de combustion selon revendication 14 **caractérisée en ce qu'**au moins un des composants du secteur externe est en contact avec de plateformes du séparateur à conduction électrique.

**16.** Procédure pour la production des unités des électrodes d'une membrane selon une ou plusieurs revendications précédentes **caractérisée en ce que** on connecte une membrane avec deux couches de diffusion de gaz et après on applique au moins une autre couche polymérique sur le secteur externe de la membrane.

**17.** Procédure selon revendication 16, **caractérisée en ce que** la couche polymérique du secteur externe est appliquée par laminage.

**18.** Procédure selon revendication 17, **caractérisée en ce que** la couche polymérique du secteur externe est appliquée par extrusion.

**Figur 1:**

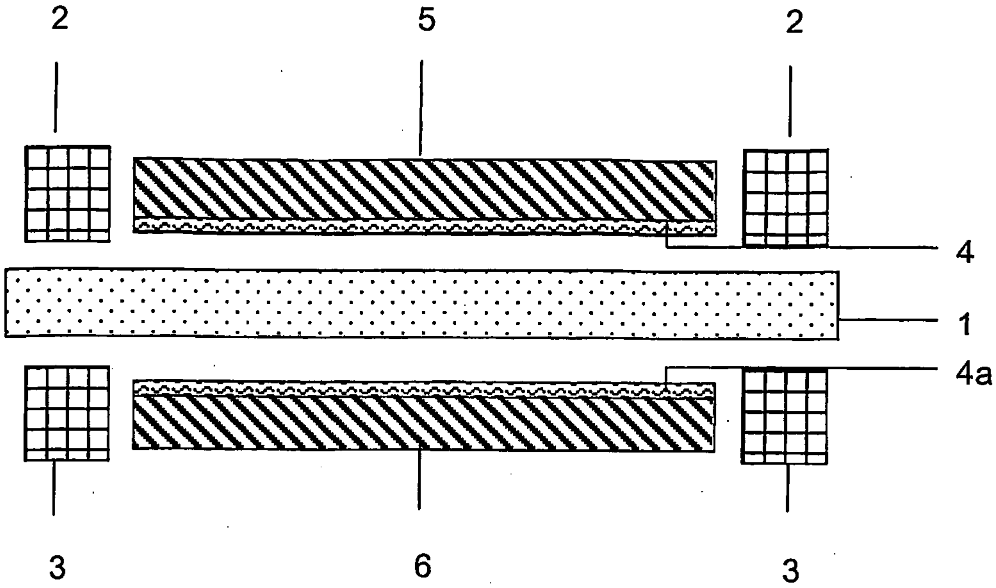


**Figur 2:**

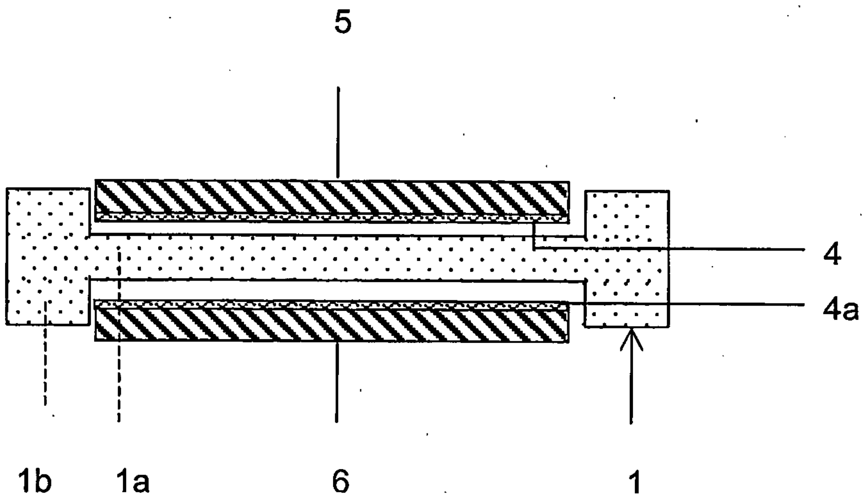

Figur 3

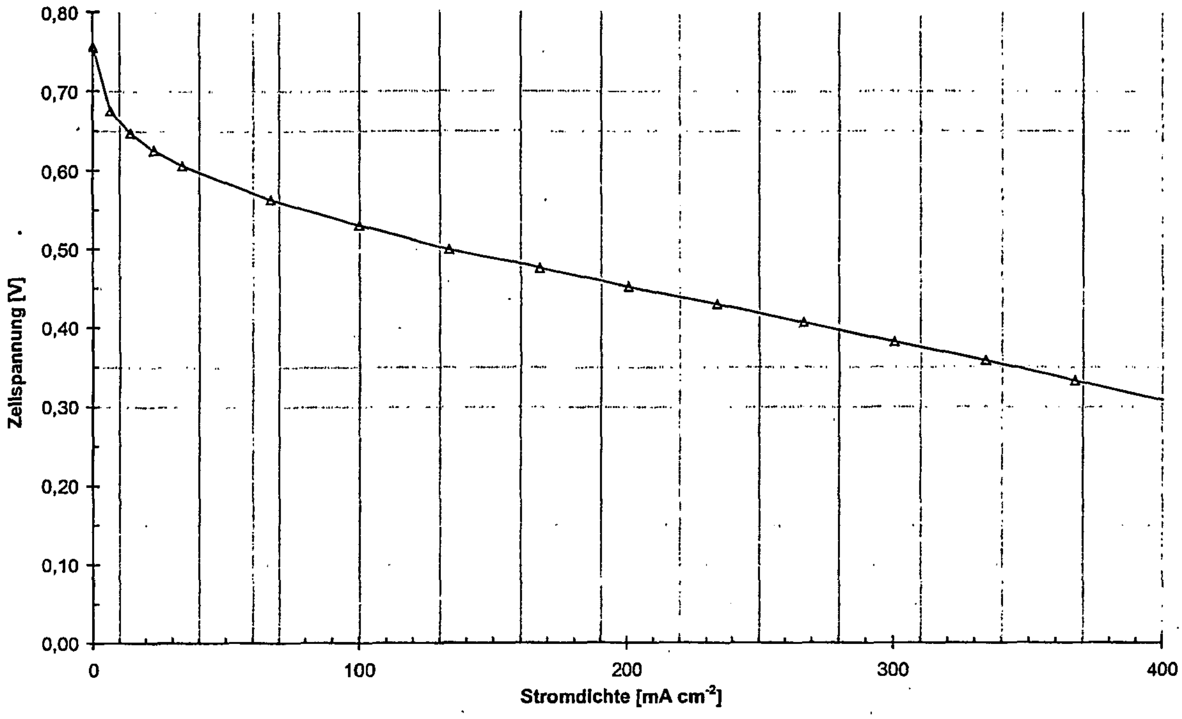
0,80
0,70
0,60
0,50
0,40
0,30
0,20
0,10
0,00
Zellspannung [V]
0
100
200
300
400
Stromdichte [mA cm-2]

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- US 5464700 A
- WO 9613872 A
- JP 2001196082 A
- DE 10235360
- DE 10129458
- DE 19959289 A
- US 6110616 A
- US 5422411 A
- DE 4219077 A
- WO 9601177 A
- DE 19527435 A
- WO 0118894 A2
- DE 19509748
- DE 19509749
- WO 0026982 A
- WO 9215121 A
- DE 19757492
- US 4191618 A
- US 4212714 A
- US 4333805 A
- DE 10331365


### In der Beschreibung aufgeführte Nicht-Patentliteratur


- **F. Kucera.** *Polymer Engineering and Science,* 1988, vol. 38 (5), 783-792
- *J. Membr. Sci.,* 1993, vol. 83, 211
- **Gang, Xiao ; Hjuler, H. A. ; Olsen, C. ; Berg, R. W. ; Bjerrum, N. J.** *J. Electrochem. Soc.,* 1993, vol. 140 (4), 896-902
- **Razaq, M. ; Razaq, A. ; Yeager, E. ; DesMarteau, Darryl D. ; Singh, S.** Case Cent. Electrochem. Sci., Case West. Reserve Univ. *J. Electrochem. Soc.,* 1989, vol. 136 (2), 385-90
- **Hans Joerg Elias.** Makromolekulare Chemie. vol. 1, 492-511
- **D. R. Arnold ; N. C. Baird ; J. R. Bolton ; J. C. D. Brand ; P. W. M Jacobs ; P.de Mayo ; W. R. Ware.** Photochemistry-An Introduction. Academic Press
- **M.K.Mishra.** Radical Photopolymerization of Vinyl Monomers. *J. Macromol. Sci.-Revs. Macromol. Chem. Phys.,* 1982, vol. C22, 409